(19) Europäisches Patentamt
European Patent Office
Office européen des brevets

(11) **EP 4 235 541 A1**

(12) **EUROPEAN PATENT APPLICATION**

(43) Date of publication:
**30.08.2023 Bulletin 2023/35**

(21) Application number: **22215502.0**

(22) Date of filing: **21.12.2022**

(51) International Patent Classification (IPC):
**G06Q 10/0835** (2023.01)   **G06Q 10/047** (2023.01)
**G06Q 50/28** (2012.01)

(52) Cooperative Patent Classification (CPC):
**G06Q 50/28; G06Q 10/047; G06Q 10/08355**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022029856**

(71) Applicant: **FUJITSU LIMITED**
**Kawasaki-shi, Kanagawa 211-8588 (JP)**

(72) Inventors:
• **IKEDA, Hiroshi**
  **Kawasaki-shi, Kanagawa, 211-8588 (JP)**
• **KAMEYAMA, Hiroaki**
  **Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING DEVICE**

(57)   An information processing program that causes a computer to execute a process that includes acquiring a first candidate group that includes candidates of operating routes of each of a plurality of mobile bodies; acquiring a second candidate group that includes candidates of delivery routes of each of packages, the delivery routes being combinations of candidates of operating routes; setting a function that uses a first variable that indicates whether to select each of the candidates included in the first candidate group and a second variable that indicates whether to select each of the candidates included in the second candidate group; determining operation and delivery routes so as to minimize the value specified by the function under a constraint that candidates of operating routes included in the combination of selected candidates of the delivery routes according to the second variable, are selected according to the first variable.

FIG. 1

## Description

FIELD

The embodiment discussed herein is related to an information processing program, an information processing method, and an information processing device.

BACKGROUND

Conventionally, in a physical distribution industry, there are cases where a delivery plan is created that defines how to load a package on a mobile body and how to deliver the same in order to reduce a delivery cost. The delivery plan is formed of an operation plan and a physical distribution plan. The operation plan defines a route on which the mobile body moves. The physical distribution plan defines how to deliver the package from a departure point to a destination point, and defines the mobile body out of one or a plurality of mobile bodies used therefore. For example, an expert creates the operation plan and creates the physical distribution plan based on the created operation plan.

As a conventional technology, for example, a transportation plan is created with a backward voyage as a start point for a series of transportation processes that continue from loading, forward voyage, unloading, backward voyage, and further loading, and then the transportation plan for one voyage is fixed in order of the backward voyage, loading, forward voyage, and unloading. Furthermore, for example, there is a technology of extracting process route selectable candidates for a group of products to be manufactured or conveyed, and selecting a strategically superior combination from all combinations of the extracted process route selectable candidates. Furthermore, for example, there is a technology of generating, in a case where an input premise model matches a collation part of a read premise rule, one or more constraint expressions represented by an expansion part corresponding to the matching collation part as the constraint expressions expanded from the input premise model. Furthermore, for example, there is a technology of optimizing a transportation schedule and pricing in freight transportation together. Furthermore, for example, there is a technology of selecting a transportation company to reduce an entire cost.

Japanese Laid-open Patent Publication No. 2012-020839, Japanese Laid-open Patent Publication No. 2002-229635, Japanese Laid-open Patent Publication No. 2019-012488, U.S. Patent Application Publication No. 2018/0082253, and U.S. Patent Application Publication No. 2006/0241822 are disclosed as related art

SUMMARY

[TECHNICAL PROBLEM]

However, the conventional technology might increase a processing amount required when creating a delivery plan. For example, a physical distribution plan depending on an operation plan is created after the operation plan is created, so that it is difficult to reduce a delivery cost in an entire delivery plan, and a processing amount required when creating the entire delivery plan easily increase.

In one aspect, it is an object of this embodiment to reduce the processing amount required when creating the delivery plan.

[SOLUTION TO PROBLEM]

According to an aspect of the embodiments, an information processing program that causes at least one computer to execute a process, the process includes acquiring a first candidate group that includes candidates of operating routes of each of a plurality of mobile bodies; acquiring a second candidate group that includes candidates of delivery routes of each of packages, the delivery routes being combinations of candidates of operating routes selected from the first candidate group; setting a function that uses a first variable that indicates whether to select each of the candidates included in the first candidate group and a second variable that indicates whether to select each of the candidates included in the second candidate group, the function specifying a value based on a first cost regarding an operation of a mobile body of the plurality of mobile bodies and a second cost regarding a delivery of a package of the plurality of packages; determining operation routes of each of the plurality of mobile bodies from the first candidate group and delivery routes of each of the plurality of packages from the second candidate group so as to minimize the value specified by the function under a constraint, the constraint being that candidates of operating routes included in the combination of selected candidates of the delivery routes from the second candidate group according to the second variable, are selected from the first candidate group according to the first variable; and outputting the operation routes of each of the plurality of mobile bodies and the delivery routes of each of the plurality of packages.

[ADVANTAGEOUS EFFECTS OF INVENTION]

According to an aspect, a processing amount required when creating a delivery plan may be reduced.

BRIEF DESCRIPTION OF DRAWINGS

FIG. 1 is an explanatory diagram (part 1) illustrating an example of an information processing method according to an embodiment;

FIG. 2 is an explanatory diagram (part 2) illustrating an example of the information processing method according to the embodiment;

FIG. 3 is an explanatory diagram illustrating an example of an information processing system 300;

FIG. 4 is a block diagram illustrating a hardware configuration example of an information processing device 100;

FIG. 5 is a block diagram illustrating a functional configuration example of the information processing device 100;

FIG. 6 is an explanatory diagram (part 1) illustrating an operation example of the information processing device 100;

FIG. 7 is an explanatory diagram (part 2) illustrating the operation example of the information processing device 100;

FIG. 8 is an explanatory diagram (part 3) illustrating the operation example of the information processing device 100;

FIG. 9 is an explanatory diagram (part 4) illustrating the operation example of the information processing device 100;

FIG. 10 is an explanatory diagram (part 5) illustrating the operation example of the information processing device 100;

FIG. 11 is an explanatory diagram (part 6) illustrating the operation example of the information processing device 100;

FIG. 12 is an explanatory diagram (part 7) illustrating the operation example of the information processing device 100;

FIG. 13 is an explanatory diagram (part 8) illustrating the operation example of the information processing device 100;

FIG. 14 is an explanatory diagram (part 9) illustrating the operation example of the information processing device 100;

FIG. 15 is an explanatory diagram (part 10) illustrating the operation example of the information processing device 100;

FIG. 16 is a flowchart illustrating an example of an entire processing procedure;

FIG. 17 is a flowchart illustrating an example of a first generation processing procedure;

FIG. 18 is a flowchart illustrating another example of the first generation processing procedure;

FIG. 19 is a flowchart illustrating an example of a second generation processing procedure; and

FIG. 20 is a flowchart illustrating another example of the second generation processing procedure.

DESCRIPTION OF EMBODIMENTS

Hereinafter, an embodiment of an information processing program, an information processing method, and an information processing device will be described in detail with reference to the drawings.

(Example of Information Processing Method according to Embodiment)

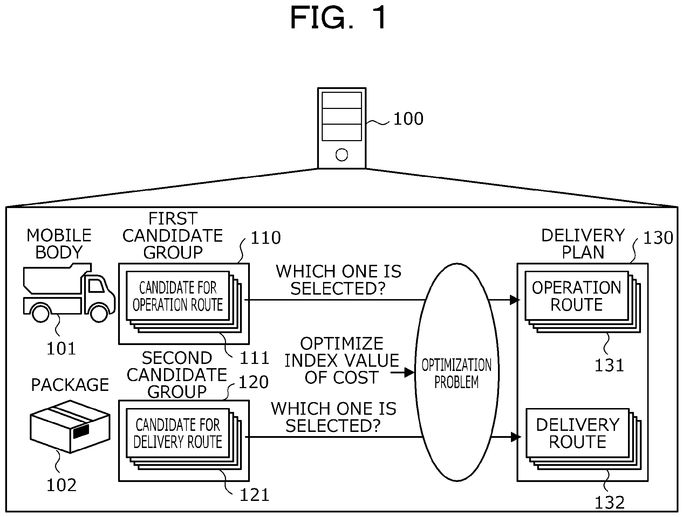

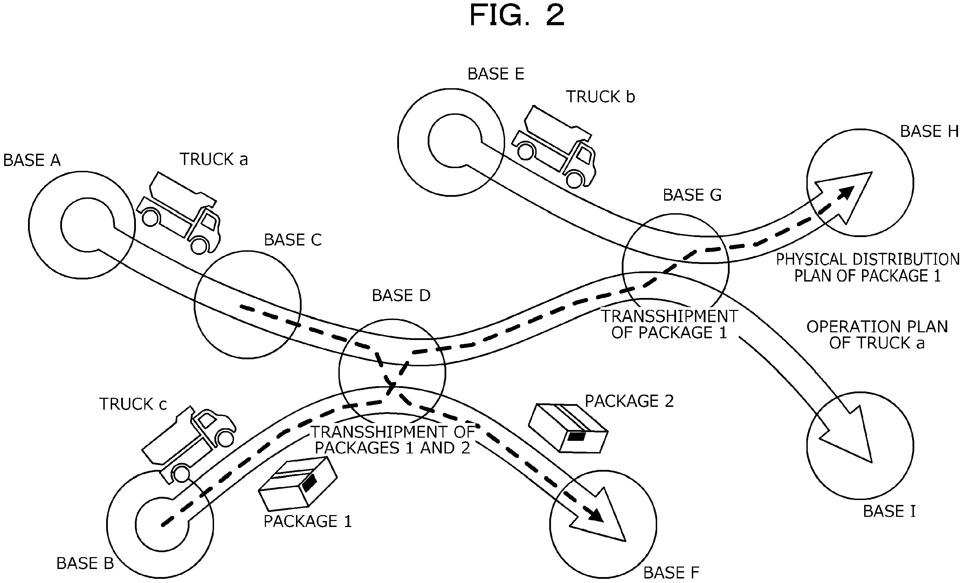

FIGs. 1 and 2 are explanatory diagrams illustrating an example of an information processing method according to an embodiment. In FIG. 1, an information processing device 100 is a computer for reducing a processing amount required when creating a delivery plan that defines how to load a package onto a mobile body and how to deliver the same.

The information processing device 100 is, for example, a server, a personal computer (PC) or the like. The mobile body is, for example, a person, a bicycle, a truck, an airplane, a ship or the like. The package is, for example, an object. The package may be, for example, a person.

Here, it is desirable to create the delivery plan so as to reduce a delivery cost. The delivery cost includes, for example, a cost regarding fuel, time or the like required when the mobile body operates. The cost is, for example, a financial, human, or time cost. The delivery cost includes, for example, a cost required when delivering the package and the like. The delivery cost includes, for example, a cost required when transshipping the package between the mobile bodies.

The delivery plan is formed of an operation plan and a physical distribution plan. The operation plan defines, for example, an operation route on which the mobile body operates. The operation route corresponds, for example, a moving route of the mobile body. The physical distribution plan defines, for example, how to deliver the package from a departure point to a destination point, and defines the mobile body out of one or a plurality of mobile bodies used therefore. The physical distribution plan defines, for example, a delivery route of the package using one or a plurality of mobile bodies.

Conventionally, for example, there is a case where an expert creates the operation plan and creates the physical distribution plan based on the created operation plan. In this case, the expert creates the operation plan and thereafter creates the physical distribution plan depending on the operation plan, so that it is difficult to reduce the delivery cost in an entire delivery plan. When the expert repeats trial and error to create the entire delivery plan to reduce the delivery cost, a rework occurs. Therefore, there is a problem that the processing amount, processing time and the like required until an appropriate delivery plan is created tend to increase.

In contrast, a method in which all combinations of the packages, the mobile bodies that deliver the packages, and the operation routes of the mobile bodies are verified, thereby simultaneously optimizing the operation plan and the physical distribution plan is conceivable. Even by this method, it is difficult to solve the problem that the processing amount, the processing time and the like required until the appropriate delivery plan is created tend to increase. As the number of packages and the number of mobile bodies increase, the processing amount, the processing time and the like required until the appropriate delivery plan is created increase due to a combination explosion.

For these reasons, it is desirable to create the appropriate delivery plan so as to reduce the processing amount and the processing time required when creating the delivery plan and to reduce the delivery cost. Therefore, in this embodiment, the information processing method capable of reducing the processing amount and the processing time required when creating the delivery plan is described.

(1-1) The information processing device 100 acquires a first candidate group 110 including one or more candidates 111 for an operation route of a mobile body 101 generated for each mobile body 101 out of a plurality of mobile bodies 101. The information processing device 100 acquires the first candidate group 110 by generating the first candidate group 110, for example. The information processing device 100 may acquire the first candidate group 110 by receiving the first candidate group 110 from another computer, for example.

(1-2) The information processing device 100 acquires a second candidate group 120 including one or more candidates 121 for a delivery route of a package 102 using one or more mobile bodies 101 included in the plurality of mobile bodies 101 generated for each package 102 out of a plurality of packages 102. The second candidate group 120 is generated based on the first candidate group 110, for example. The information processing device 100 acquires the second candidate group 120 by generating the second candidate group 120, for example. The information processing device 100 may acquire the second candidate group 120 by receiving the second candidate group 120 from another computer, for example.

(1-3) The information processing device 100 sets an optimization problem using a first variable indicating whether to select each candidate 111 included in the acquired first candidate group 110 and a second variable indicating whether to select each candidate 121 included in the acquired second candidate group 120. The first variable indicates, for example, whether to select the candidate 111 included in the first candidate group 110 as an operation route 131 that forms a delivery plan 130. The second variable indicates, for example, whether to select the candidate 121 included in the second candidate group 120 as a delivery route 132 that forms the delivery plan 130.

An object of the optimization problem is to optimize an index value based on a first cost regarding an operation of the mobile body 101 and a second cost regarding delivery of the package 102. The optimization problem includes, for example, an objective function indicating the index value based on the first cost and the second cost. The index value corresponds to, for example, the delivery cost. The first cost includes, for example, a cost regarding fuel, time or the like required when the mobile body 101 operates. The second cost includes, for example, a cost regarding an amount of the package 102, the number of times the package 102 is transshipped or the like required when delivering the package 102.

By solving the set optimization problem, the information processing device 100 determines the operation route 131 of each mobile body 101 out of the first candidate group 110, and determines the delivery route 132 of each package 102 out of the second candidate group 120. The information processing device 100 calculates a solution of each first variable and a solution of each second variable by solving the optimization problem, for example.

The information processing device 100 determines whether the solution of any first variable indicates to select the candidate 111 corresponding to the first variable out of the first candidate group 110 as the operation route 131 that forms the delivery plan 130, for example. When it is indicated that the candidate 111 corresponding to the first variable is selected as the operation route 131 that forms the delivery plan 130, the information processing device 100 determines that the candidate 111 corresponding to the first variable is the operation route 131 that forms the delivery plan 130, for example.

The information processing device 100 determines whether the solution of any second variable indicates to select the candidate 121 corresponding to the second variable out of the second candidate group 120 as the delivery route 132 that forms the delivery plan 130, for example. When it is indicated that the candidate 121 corresponding to the second variable is selected as the delivery route 132 that forms the delivery plan 130, the information processing device 100 determines that the candidate 121 corresponding to the second variable is the delivery route 132 that forms the delivery plan 130, for example.

The information processing device 100 creates the delivery plan 130 including the determined operation route 131 and the determined delivery route 132. Therefore, the information processing device 100 may create an appropriate delivery plan 130 so as to reduce the delivery cost while reducing the processing amount and the processing time required when creating the delivery plan 130. Next, it shifts to the description of FIG. 2, and an example of the delivery plan 130 to be created is described.

In the example of FIG. 2, the mobile body 101 is assumed to be a truck. The delivery plan 130 includes, for example, an operation route from a base A to a base I via bases C, D, and G in this order as an operation route of a truck a. The delivery plan 130 includes, for example, an operation route from a base E to a base H via the base G as an operation route of a truck b. The delivery plan 130 includes, for example, an operation route from a base B to a base F via the base D as an operation route of a truck c.

The delivery plan 130 includes, for example, a delivery route from the base B to the base H via the bases D and G as a delivery route of a package 1. The package 1 is transshipped from the truck c to the truck a at the base D. The package 1 is transshipped from the truck a to the truck b at the base G. The delivery plan 130 includes, for example, a delivery route from the base C to the base F via the base D as a delivery route of a package 2. The package 2 is transshipped from the truck a to the truck c at the base D.

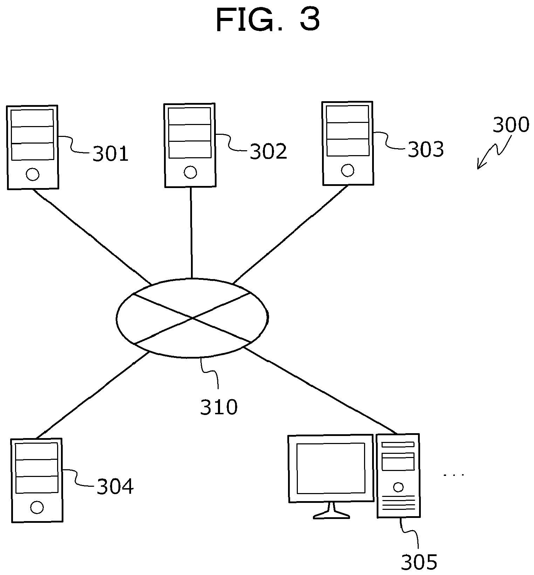

Here, a case where the information processing device 100 operates independently is described, but it is not limited to this. For example, there may be a case where a plurality of computers cooperates to implement a function as the information processing device 100. For example, there may be a case where a computer that generates the first candidate group 110, a computer that generates the second candidate group 120, a computer that sets the optimization problem, and a computer that solves the optimization problem cooperate with one another. An example of a case where the plurality of computers cooperates with one another is described later with reference to FIG. 3.

(Example of Information Processing System 300)

Next, an example of an information processing system 300 that implements the function as the information processing device 100 illustrated in FIG. 1 is described with reference to FIG. 3.

FIG. 3 is an explanatory diagram illustrating an example of the information processing system 300. In FIG. 3, the information processing system 300 includes a first generation device 301, a second generation device 302, a problem setting device 303, a solution processing device 304, and a client device 305.

In the information processing system 300, the first generation device 301 and the problem setting device 303 are connected to each other via a wired or wireless network 310. The network 310 is, for example, a local area network (LAN), a wide area network (WAN), the Internet and the like. Furthermore, the first generation device 301 and the solution processing device 304 are connected to each other via the wired or wireless network 310.

Furthermore, the second generation device 302 and the problem setting device 303 are connected to each other via the wired or wireless network 310. Furthermore, the second generation device 302 and the solution processing device 304 are connected to each other via the wired or wireless network 310. Furthermore, the problem setting device 303 and the solution processing device 304 are connected to each other via the wired or wireless network 310. Furthermore, the solution processing device 304 and the client device 305 are connected to each other via the wired or wireless network 310.

The first generation device 301 is the computer that generates the first candidate group. The first generation device 301 receives a request for generating the first candidate group from the solution processing device 304. The first generation device 301 generates the first candidate group in response to the request for generating the first candidate group, and transmits the same to the problem setting device 303. The first generation device 301 is, for example, a server, a PC or the like.

The second generation device 302 is the computer that generates the second candidate group. The second generation device 302 receives a request for generating the second candidate group from the solution processing device 304. The second generation device 302 generates the second candidate group in response to the request for generating the second candidate group, and transmits the same to the problem setting device 303. The second generation device 302 is, for example, a server, a PC or the like.

The problem setting device 303 is the computer that sets the optimization problem. The problem setting device 303 receives the first candidate group from the first generation device 301. The problem setting device 303 receives the second candidate group from the second generation device 302. The problem setting device 303 sets the optimization problem to optimize the index value regarding the delivery cost based on the received first candidate group and the received second candidate group. The problem setting device 303 transmits the set optimization problem to the solution processing device 304. The problem setting device 303 is, for example, a server, a PC or the like.

The solution processing device 304 is the computer that solves the optimization problem and creates the delivery plan. The solution processing device 304 receives a request for creating the delivery plan from the client device 305. In response to the request for creating the delivery plan, the solution processing device 304 transmits the request for generating the first candidate group to the first generation device 301, and transmits the request for generating the second candidate group to the second generation device 302. The solution processing device 304 receives the optimization problem from the problem setting device 303. The solution processing device 304 determines the operation route and determines the delivery route by solving the optimization problem. The solution processing device 304 creates the delivery plan including the determined operation route and the determined delivery route, and transmits the same to the client device 305. The solution processing device 304 is, for example, a server, a PC or the like.

The client device 305 is a computer used by a user who uses the delivery plan. The client device 305 transmits the request for creating the delivery plan to the solution processing device 304 based on an operation input by the user. The client device 305 receives the delivery plan from the solution processing device 304. The client device 305 outputs the received delivery plan so that the user may refer to the same. The client device 305 is, for example, a PC, a tablet terminal, a smartphone or the like.

Here, a case where the first generation device 301 and the second generation device 302 are different devices is described, but it is not limited to this. For example, there may be a case where the first generation device 301 has a function as the second generation device 302 and also operates as the second generation device 302. Here, a case where the problem setting device 303 and the solution processing device 304 are different devices is described, but it is not limited to this. For example, there may be a case where the problem setting device 303 has a function as the solution processing device 304 and also operates as the solution processing device 304.

Here, a case where the problem setting device 303 and the first generation device 301 are different devices is described, but it is not limited to this. For example, there may be a case where the problem setting device 303 has a function as the first generation device 301 and also operates as the first generation device 301. Here, a case where the problem setting device 303 and the second generation device 302 are different devices is described, but it is not limited to this. For example, there may be a case where the problem setting device 303 has a function as the second generation device 302 and also operates as the second generation device 302. Hereinafter, a case where the information processing device 100 operates independently is mainly described.

(Hardware Configuration Example of Information Processing Device 100)

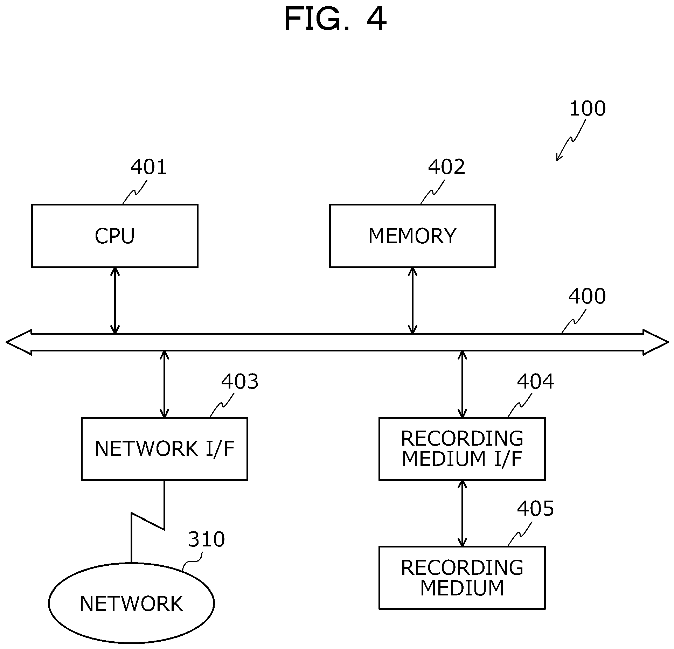

Next, a hardware configuration example of the information processing device 100 is described with reference to FIG. 4.

FIG. 4 is a block diagram illustrating the hardware configuration example of the information processing device 100. In FIG. 4, the information processing device 100 includes a central processing unit (CPU) 401, a memory 402, a network interface (I/F) 403, a recording medium I/F 404, and a recording medium 405. Furthermore, the respective components are connected to one another by a bus 400.

Here, the CPU 401 controls an entire information processing device 100. The memory 402 includes, for example, a read only memory (ROM), a random access memory (RAM), a flash ROM and the like. For example, the flash ROM or the ROM stores various programs, and the RAM is used as a work area for the CPU 401. The program stored in the memory 402 is loaded onto the CPU 401, thereby causing the CPU 401 to execute coded processing.

The network I/F 403 is connected to the network 310 via a communication line, and is connected to another computer via the network 310. Then, the network I/F 403 serves as an interface between the network 310 and the inside to control an input and an output of data from and to the another computer. The network I/F 403 is, for example, a modem, a LAN adapter and the like.

The recording medium I/F 404 controls reading and writing of data from and to the recording medium 405 under the control of the CPU 401. The recording medium I/F 404 is, for example, a disk drive, a solid state drive (SSD), a universal serial bus (USB) port and the like. The recording medium 405 is a nonvolatile memory that stores the data written under the control of the recording medium I/F 404. The recording medium 405 is, for example, a disk, a semiconductor memory, a USB memory and the like. The recording medium 405 may be attachable to and detachable from the information processing device 100.

The information processing device 100 may include, for example, a keyboard, a mouse, a display, a printer, a scanner, a microphone, a speaker and the like in addition to the above-described components. Furthermore, the information processing device 100 may include a plurality of recording media I/Fs 404 and a plurality of recording media 405. Furthermore, the information processing device 100 does not have to include the recording medium I/F 404 or the recording medium 405.

Since a hardware configuration example of the first generation device 301, the second generation device 302, the problem setting device 303, the solution processing device 304, and the client device 305 is similar to the hardware configuration example of the information processing device 100 illustrated in FIG. 4, for example, description thereof is omitted.

(Functional Configuration Example of Information Processing Device 100)

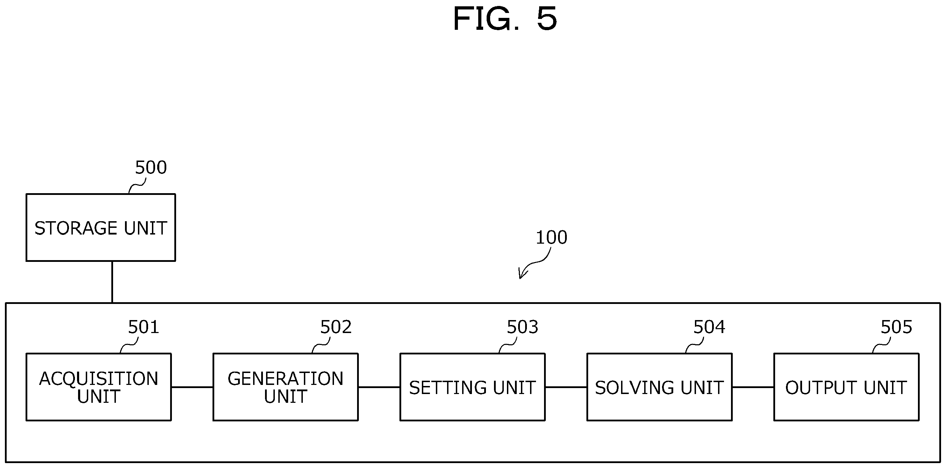

Next, a functional configuration example of the information processing device 100 is described with reference to FIG. 5.

FIG. 5 is a block diagram illustrating the functional configuration example of the information processing device 100. The information processing device 100 includes a storage unit 500, an acquisition unit 501, a generation unit 502, a setting unit 503, a solving unit 504, and an output unit 505.

The storage unit 500 is implemented by, for example, a storage area such as the memory 402 and the recording medium 405 illustrated in FIG. 4. Hereinafter, a case where the storage unit 500 is included in the information processing device 100 is described, but it is not limited to this. For example, there may be a case where the storage unit 500 is included in a device different from the information processing device 100, and the information processing device 100 may refer to stored contents of the storage unit 500.

The acquisition unit 501 to the output unit 505 serve as an example of a control unit. For example, the acquisition unit 501 to the output unit 505 implement functions thereof by causing the CPU 401 to execute the program stored in the storage area such as the memory 402 and the recording medium 405 illustrated in FIG. 4 or by the network I/F 403. A processing result of each functional unit is stored in, for example, the storage area such as the memory 402 and the recording medium 405 illustrated in FIG. 4.

The storage unit 500 stores various types of information referred to or updated in the processing of each functional unit. The storage unit 500 stores, for example, a plurality of points. The point may be, for example, a departure point, a passing point, or an arrival point of the mobile body. The point may be, for example, a departure point, a passing point, or an arrival point of the package. The storage unit 500 stores, for example, a connection relationship between the points. For example, the storage unit 500 stores information indicating the points between which the mobile body is movable so as to be specified. The storage unit 500 may store, for example, a cost between the points. For example, the storage unit 500 stores information indicating the financial or time cost required when the mobile body moves between the points.

The storage unit 500 stores the first candidate group including one or more candidates for the operation route of the mobile body generated for each mobile body out of a plurality of mobile bodies, for example. The candidate for the operation route indicates, for example, a combination of the departure point, the passing point, and the arrival point of the mobile body. The first candidate group is acquired by, for example, the acquisition unit 501. The first candidate group may be generated by, for example, the generation unit 502.

The storage unit 500 stores the second candidate group including one or more candidates for the delivery route of the package generated for each package out of a plurality of packages, for example. The second candidate group is generated based on the first candidate group, for example. The candidate for the delivery route is implemented using one or more mobile bodies included in the plurality of mobile bodies. The candidate for the delivery route indicates, for example, a combination of the departure point, the passing point, and the arrival point of the package. The second candidate group is acquired by, for example, the acquisition unit 501. The second candidate group may be generated by, for example, the generation unit 502.

The storage unit 500 stores, for example, the delivery plan. The delivery plan is formed of one or more operation routes and one or more delivery routes. The operation route indicates, for example, a combination of the departure point, the passing point, and the arrival point of the mobile body. The operation route corresponds to, for example, the candidate included in the first candidate group. For example, the candidate included in the first candidate group is selected as the operation route, so that the operation route is determined.

The delivery route indicates, for example, a combination of the departure point, the passing point, and the arrival point of the package. The delivery route corresponds to, for example, the candidate included in the second candidate group. For example, the candidate included in the second candidate group is selected as the delivery route, so that the delivery route is determined. The delivery plan is determined by the solving unit 504, for example. The operation route is determined by the solving unit 504, for example. The delivery route is determined by the solving unit 504, for example.

The acquisition unit 501 acquires various types of information used in the processing of each functional unit. The acquisition unit 501 stores the acquired various types of information in the storage unit 500 or outputs the same to each functional unit. Furthermore, the acquisition unit 501 may output the various types of information stored in the storage unit 500 to each functional unit. The acquisition unit 501 acquires the various types of information based on, for example, the operation input by the user. The acquisition unit 501 may receive the various types of information from, for example, a device different from the information processing device 100.

The acquisition unit 501 acquires, for example, the first candidate group. The acquisition unit 501 acquires the first candidate group by receiving the first candidate group from another computer, for example. The acquisition unit 501 may acquire the first candidate group by accepting an input of the first candidate group based on the operation input by the user, for example.

The acquisition unit 501 acquires, for example, the second candidate group. The acquisition unit 501 acquires the second candidate group by receiving the second candidate group from another computer, for example. The acquisition unit 501 may acquire the second candidate group by accepting an input of the second candidate group based on the operation input by the user, for example.

The acquisition unit 501 may acquire first information that enables generation of the first candidate group, for example. The first information includes, for example, information indicating the departure point and the arrival point of the mobile body. This makes it possible for the acquisition unit 501 to generate the first candidate group.

The acquisition unit 501 may acquire second information that enables generation of the second candidate group, for example. The second information includes, for example, information indicating the departure point and the arrival point of the package. The second information may include, for example, information indicating an amount of the packages that the mobile body may deliver. This makes it possible for the acquisition unit 501 to generate the second candidate group.

The acquisition unit 501 may accept a start trigger to start the processing of any functional unit. The start trigger is, for example, a predetermined operation input by the user. The start trigger may be, for example, reception of predetermined information from another computer. The start trigger may be, for example, an output of predetermined information by any functional unit.

The acquisition unit 501 may accept the fact that the first candidate group and the second candidate group are acquired as the start trigger to start processing of the setting unit 503 and the solving unit 504, for example. The acquisition unit 501 may accept the fact that the first information that enables the generation of the first candidate group and the second information that enables the generation of the second candidate group as the start trigger to start processing of the generation unit 502, the setting unit 503, and the solving unit 504, for example.

The generation unit 502 generates the first candidate group. The generation unit 502 generates a shortest operation route from the departure point of the mobile body to the arrival point of the mobile body as the candidate for the operation route of the mobile body based on the first information with reference to the storage unit 500, for example. The generation unit 502 generates one or more bypass routes from the departure point of the mobile body to the arrival point of the mobile body based on the generated shortest operation route as the candidate for the operation route of the mobile body based on the first information with reference to the storage unit 500, for example. The generation unit 502 generates the first candidate group including generated one or more candidates for the operation route of the mobile body, for example. Therefore, the generation unit 502 may set the optimization problem and may determine the operation route that forms the delivery plan.

The generation unit 502 may specify, for example, out of existing operation routes of each mobile body, the passing point of the mobile body on the operation route on which the amount of the packages delivered by the mobile body is relatively small. The generation unit 502 generates the operation route from the departure point of the mobile body to the arrival point of the mobile body including the specified passing point as the candidate for the operation route of the mobile body based on the first information with reference to the storage unit 500, for example. The generation unit 502 generates the first candidate group including generated one or more candidates for the operation route of the mobile body, for example. Therefore, the generation unit 502 may set the optimization problem and may determine the operation route that forms the delivery plan. The generation unit 502 may facilitate the reduction in delivery cost in the delivery plan.

The generation unit 502 generates the second candidate group. The generation unit 502 generates the delivery route from the departure point of the package to the arrival point of the package formed of a combination of a relatively small number of candidates out of the acquired first candidate group as a candidate for the delivery route of the package based on the second information with reference to the storage unit 500, for example. The generation unit 502 generates the second candidate group including the generated candidate for the delivery route of the package, for example. Therefore, the generation unit 502 may set the optimization problem and may determine the delivery route that forms the delivery plan.

The generation unit 502 may generate the delivery route from the departure point of the package to the arrival point of the package on which delivery time of the package becomes relatively short formed of a combination of one or more candidates out of the acquired first candidate group as the candidate for the delivery route of the package based on the second information, for example. The generation unit 502 generates the second candidate group including the generated candidate for the delivery route of the package, for example. Therefore, the generation unit 502 may set the optimization problem and may determine the delivery route that forms the delivery plan.

The setting unit 503 sets the optimization problem to optimize the index value using the first variable indicating whether to select each candidate included in the acquired first candidate group and the second variable indicating whether to select each candidate included in the acquired second candidate group. The index value is defined based on the first cost regarding the operation of the mobile body and the second cost regarding the delivery of the package, for example. The index value corresponds to, for example, the delivery cost regarding the entire delivery plan. As a value of the index value is smaller, it is indicated that the delivery cost is smaller, for example. The optimization is, for example, minimization.

The first cost is defined based on the number of candidates selected out of the first candidate group, whether the mobile body corresponding to the candidate exists, and the operation time of the mobile body corresponding to the candidate, for example. The second cost is defined based on the number of candidates selected out of the second candidate group, the amount of the packages corresponding to the candidate, and the number of mobile bodies that deliver the package corresponding to the candidate, for example. Therefore, the setting unit 503 may determine the operation route and the delivery route.

The setting unit 503 may set, for example, the optimization problem including a constraint regarding an upper limit of the amount of the packages that the mobile body may deliver. Therefore, the setting unit 503 may determine feasible operation route and delivery route in consideration of the upper limit of the amount of the packages that the mobile body may deliver.

By solving the optimization problem set by the setting unit 503, the solving unit 504 determines the operation route of each mobile body out of the first candidate group, and determines the delivery route of each package out of the second candidate group, too. The solving unit 504 calculates the solution of each first variable and the solution of each second variable by solving the optimization problem, for example.

For example, when the solution of any first variable indicates to select the candidate corresponding to the first variable out of the first candidate group as the operation route that forms the delivery plan, the solving unit 504 determines that the candidate corresponding to the first variable is the operation route that forms the delivery plan. For example, when the solution of any second variable indicates to select the candidate corresponding to the second variable out of the second candidate group as the delivery route that forms the delivery plan, the solving unit 504 determines that the candidate corresponding to the second variable is the delivery route that forms the delivery plan.

The solving unit 504 generates the delivery plan including the determined operation route and the determined delivery route, for example. Therefore, the solving unit 504 may reduce the processing amount and the processing time required when generating the delivery plan. The solving unit 504 may generate the appropriate delivery plan so as to reduce the delivery cost.

The output unit 505 outputs a processing result of at least any functional unit. An output format is, for example, display on a display, a print output to a printer, transmission to an external device by the network I/F 403, or storage in the storage area such as the memory 402 and the recording medium 405. Therefore, the output unit 505 may notify the user of the processing result of at least any functional unit and may improve convenience of the information processing device 100. The output unit 505 outputs the delivery plan generated by the solving unit 504 so that the user may refer to the same. Therefore, the output unit 505 may use the appropriate delivery plan with relatively reduced delivery cost.

Here, a case where the information processing device 100 includes the acquisition unit 501, the generation unit 502, the setting unit 503, the solving unit 504, and the output unit 505 is described, but it is not limited to this. For example, there may be a case where the information processing device 100 does not include any one of the functional units. For example, there may be a case where the information processing device 100 does not include the generation unit 502. In this case, the information processing device 100 communicates with another computer including the generation unit 502 to acquire the first candidate group and the second candidate group.

(Operation Example of Information Processing Device 100)

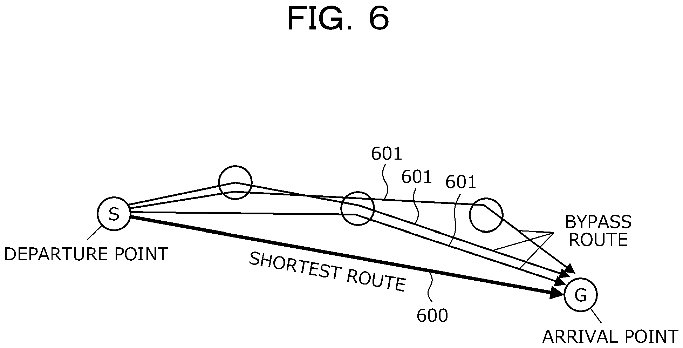

Next, an operation example of the information processing device 100 is described with reference to FIGs. 6 to 15.

FIGs. 6 to 15 are explanatory diagrams illustrating the operation example of the information processing device 100. In FIG. 6, it is assumed that the information processing device 100 stores a graph formed of a plurality of nodes representing different points, respectively. The nodes corresponding to the points between which it is possible to move are connected to each other by a link. It is assumed that the information processing device 100 stores mobile body information indicating the departure point and the arrival point of each mobile body out of a plurality of mobile bodies. The information processing device 100 generates one or more candidates for the operation plan based on the graph and the mobile body information.

In the example of FIG. 6, the information processing device 100 generates, for each mobile body, a shortest route 600 from the departure point to the arrival point of the mobile body as the candidate for the operation route, for example. The information processing device 100 generates, for each mobile body, a bypass route 601 from the departure point to the arrival point of the mobile body based on the generated candidate for the shortest operation route as the candidate for the operation route, for example. The information processing device 100 generates the candidate for the operation plan indicating the generated candidate for the operation route, for example. The candidate for the operation plan may include arrival time and departure time of the mobile body at each point on the operation route.

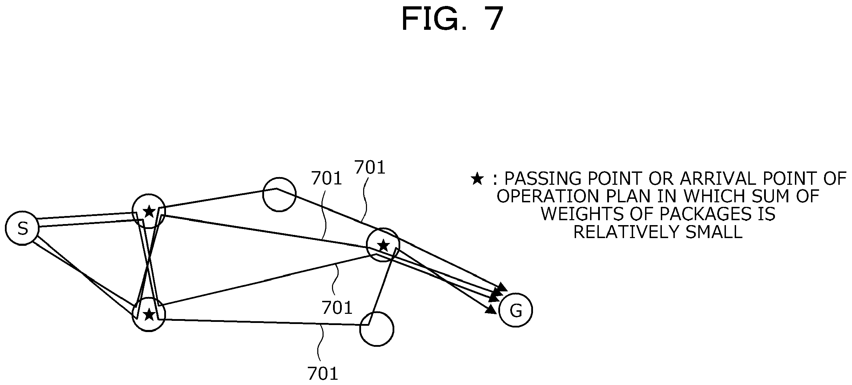

Therefore, the information processing device 100 may select various bypass routes as the operation route. The information processing device 100 may acquire the candidate for the operation route that is difficult to create manually. Therefore, the information processing device 100 may facilitate determination of the appropriate operation route. Next, it shifts to the description of FIG. 7, and another example in which the information processing device 100 generates the candidate for the operation plan will be described.

In FIG. 7, it is assumed that the information processing device 100 stores a graph formed of a plurality of nodes representing different points, respectively. The nodes corresponding to the points between which it is possible to move are connected to each other by a link. It is assumed that the information processing device 100 stores mobile body information indicating the departure point and the arrival point of each mobile body out of a plurality of mobile bodies. The information processing device 100 stores an existing delivery plan. The existing delivery plan indicates an operation route of a past mobile body, a delivery route of a past package, and a weight of the past package. The information processing device 100 generates one or more candidates for the operation plan based on the graph, the mobile body information, and the existing delivery plan.

In the example of FIG. 7, the information processing device 100 specifies a point serving as a passing point or an arrival point at which the past mobile body, the sum of the weights of the packages delivered by which is relatively small, has operated out of a plurality of points based on the graph and the existing delivery plan, for example. The information processing device 100 generates, for each mobile body, a route 701 including a relatively large number of specified points out of a plurality of routes from the departure point to the arrival point of the mobile body as the candidate for the operation route, for example. The information processing device 100 generates the candidate for the operation plan indicating the generated candidate for the operation route, for example. The candidate for the operation plan may include arrival time and departure time of the mobile body at each point on the operation route.

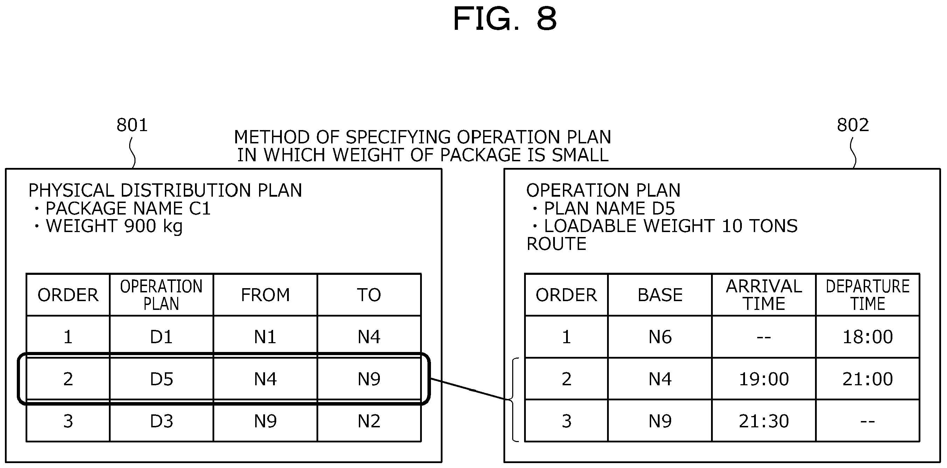

Therefore, the information processing device 100 may select the route on which the package that passes through the specified point may be retrieved to be delivered as the operation route. Therefore, the information processing device 100 may facilitate allocation of the packages handled by one mobile body to another mobile body, and may reduce the number of operation routes. Next, it shifts to the description of FIG. 8, and an example is described in which the information processing device 100 specifies the point serving as the passing point or the arrival point at which the past mobile body, the sum of the weights of the packages delivered by which is relatively small, has operated.

In FIG. 8, it is assumed that the information processing device 100 stores the existing delivery plan including a physical distribution plan 801 and an operation plan 802. The physical distribution plan 801 includes a delivery route of a past package C1 and a weight of the past package C1. The delivery route indicates, for example, from which node to which node the past package C1 is delivered, and indicates the mobile body of the operation plan by which the past package C1 is delivered. The operation plan 802 includes the operation route on which the mobile body operates. The operation route indicates, for example, when and at which node the mobile body arrives, and when and from which node this departs. The operation plan 802 may include the weight that may delivered by the mobile body.

The information processing device 100 specifies that the weight of the delivered package is 900 kg in a section from a node N4 to a node N9 on the operation route indicated by the operation plan 802 based on the physical distribution plan 801, for example. The information processing device 100 specifies the weight of the delivered package in each section of the operation route indicated by the operation plan 802 and adds up the same based on the physical distribution plan 801, for example. Therefore, the information processing device 100 may calculate the sum of the weights of the packages to be delivered on the entire operation route. Therefore, the information processing device 100 may specify the point serving as the passing point or the arrival point included in the operation route on which the past mobile body, the sum of the weights of the packages delivered by which is relatively small, has operated.

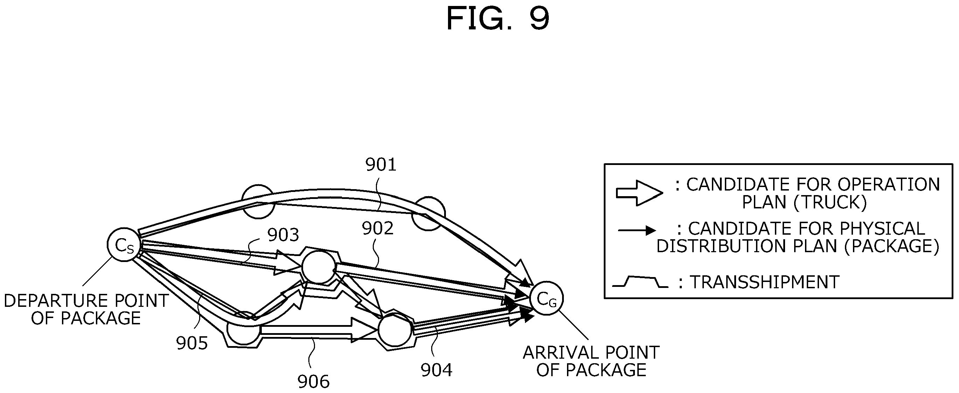

It is assumed that the information processing device 100 generates one or more candidates for the operation plan by the method illustrated in FIG. 6 or the method illustrated in FIG. 7. The information processing device 100 may generate one or more candidates for the operation plan by both the methods illustrated in FIGs. 6 and 7. Next, it shifts to the description of FIG. 9.

In FIG. 9, it is assumed that the information processing device 100 stores a graph formed of a plurality of nodes representing different points, respectively. The nodes corresponding to the points between which it is possible to move are connected to each other by a link. It is assumed that the information processing device 100 stores package information indicating the departure point and the arrival point of each package out of the plurality of packages. The information processing device 100 generates one or more candidates for the physical distribution plan based on the generated one or more candidates for the operation plan, the graph, and the package information.

In the example of FIG. 9, the information processing device 100 generates, for each package, a route on which the number of times the package is transshipped is relatively small out of a plurality of routes from the departure point to the arrival point of the package as the candidate for the delivery route based on one or more candidates for the operation plan, for example. The number of times the package is transshipped corresponds to, for example, the number of mobile bodies involved in the delivery from the departure point to the arrival point of the package. The number of times the package is transshipped corresponds to, for example, the number of candidates for the operation plan used for the candidate for the physical distribution plan.

For example, the information processing device 100 generates the route on which the number of times the package is transshipped is the smallest out of the plurality of routes from the departure point to the arrival point of the package as the candidate for the delivery route. For example, the information processing device 100 generates a route 901 on which the number of times the package is transshipped is the smallest out of a plurality of routes 901 to 906 from the departure point to the arrival point of the package as the candidate for the delivery route.

For example, the information processing device 100 may generate a predetermined number of routes in order from the route on which the number of times the package is transshipped is the smallest out of the plurality of routes from the departure point to the arrival point of the package as the candidates for the delivery route. For example, the information processing device 100 may generate the route on which the number of times the package is transshipped is smaller than a threshold out of the plurality of routes from the departure point to the arrival point of the package as the candidate for the delivery route.

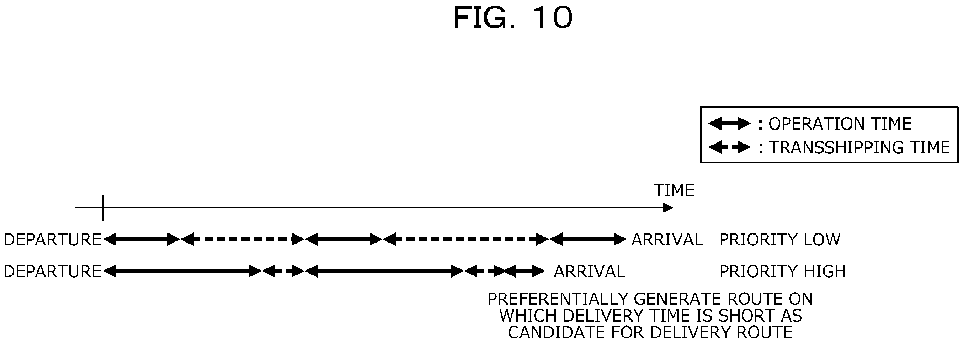

The information processing device 100 generates the candidate for the physical distribution plan indicating the generated candidate for the delivery route. Therefore, the information processing device 100 may facilitate determination of an appropriate physical distribution plan that easily suppresses an increase in delivery cost due to the transshipment of the package. Next, it shifts to the description of FIG. 10, and another example in which the information processing device 100 generates the candidate for the physical distribution plan will be described.

In FIG. 10, it is assumed that the information processing device 100 stores a graph formed of a plurality of nodes representing different points, respectively. The nodes corresponding to the points between which it is possible to move are connected to each other by a link. The information processing device 100 stores package information indicating the departure point and the arrival point of each package out of the plurality of packages. The information processing device 100 generates one or more candidates for the physical distribution plan based on the generated one or more candidates for the operation plan, the graph, and the package information.

In the example of FIG. 10, the information processing device 100 generates, for each package, a route on which the delivery time of the package is relatively small out of a plurality of routes from the departure point to the arrival point of the package as the candidate for the delivery route, for example. The delivery time is, for example, time required when delivering the package from the departure point to the arrival point of the package. The delivery time includes, for example, the operation time required when the mobile body on which the package is loaded operates, and transshipping time required when the package is transshipped between the mobile bodies.

For example, the information processing device 100 generates the route on which the delivery time is the shortest out of the plurality of routes from the departure point to the arrival point of the package as the candidate for the delivery route. For example, the information processing device 100 specifies, for each route out of the plurality of routes from the departure point to the arrival point of the package, the operation time required when the mobile body operates in each section of the route, and the transshipping time required when transshipping the package on the route. For example, the information processing device 100 calculates the delivery time on the entire route by adding the specified operation time and the specified transshipping time for each route. For example, the information processing device 100 generates the route on which the calculated delivery time is the shortest as the candidate for the delivery route.

For example, the information processing device 100 may generate a predetermined number of routes in order from the route on which the delivery time is the shortest out of the plurality of routes from the departure point to the arrival point of the package as the candidate for the delivery route. For example, the information processing device 100 may generate the route on which the delivery time is shorter than a threshold out of the plurality of routes from the departure point to the arrival point of the package as the candidate for the delivery route.

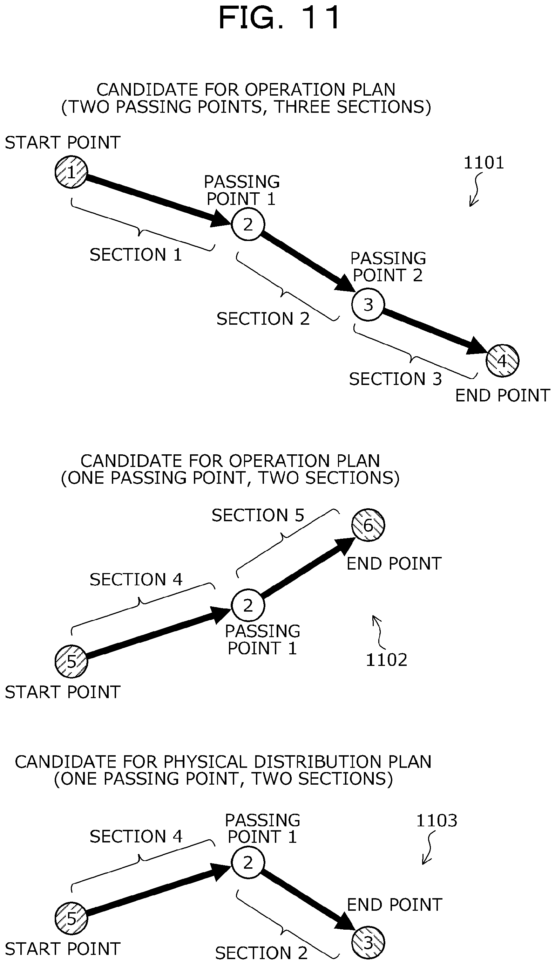

The information processing device 100 generates the candidate for the physical distribution plan indicating the generated candidate for the delivery route. Therefore, the information processing device 100 may facilitate determination of the appropriate physical distribution plan that easily suppresses the increase in delivery cost due to the operation of the mobile body. It is assumed that the information processing device 100 generates one or more candidates for the physical distribution plan by the method illustrated in FIG. 9 or the method illustrated in FIG. 10. The information processing device 100 may generate one or more candidates for the physical distribution plan by both the methods illustrated in FIGs. 9 and 10. Next, it shifts to the description of FIG. 11, and an example of the generated candidate for the operation plan and an example of the generated candidate for the physical distribution plan will be described.

As illustrated in FIG. 11, the information processing device 100 generates, for example, the candidate for the operation plan indicating a candidate 1101 for the operation route, the candidate for the operation plan indicating a candidate 1102 for the operation route and the like. The candidate 1101 for the operation route is a route connecting a point 1 as a start point, a point 2 as a passing point 1, a point 3 as a passing point 2, and a point 4 as an end point in this order. The candidate 1102 for the operation route is a route connecting a point 5 as a start point, the point 2 as a passing point 1, and a point 6 as an end point in this order.

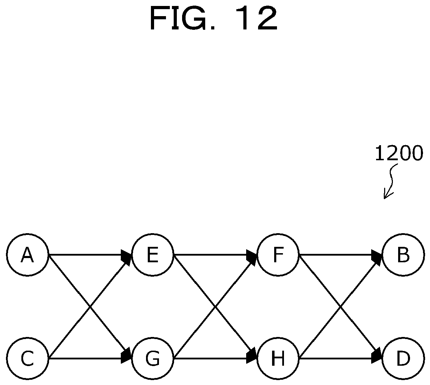

The information processing device 100 generates the candidate for the physical distribution plan indicating a candidate 1103 for the delivery route and the like, for example. The candidate 1103 for the delivery route is a route connecting the point 5 as a start point, the point 2 as a passing point 1, and the point 3 as an end point in this order. The candidate 1103 for the delivery route is formed of a combination of sections included in each candidate out of one or more candidates for the operation route. The candidate 1103 for the delivery route is formed of, for example, a combination of a section 4 included in the candidate 1102 for the operation route and a section 2 included in the candidate 1101 for the operation route. Therefore, at the point 2, the package is transshipped between the mobile bodies. Next, an example in which the information processing device 100 generates the delivery plan will be described with reference to FIGs. 12 to 15.

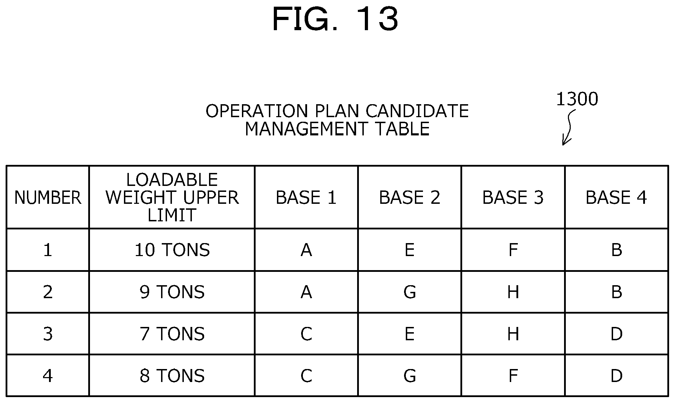

A graph 1200 of FIG. 12 is formed of a plurality of nodes representing different points, respectively. The nodes corresponding to the points between which it is possible to move are connected to each other by a link. The graph 1200 illustrates a plurality of points and the points between which it is movable so as to be specified. It is assumed that the information processing device 100 stores the graph 1200. Next, it shifts to the description of FIG. 13.

As illustrated in FIG. 13, it is assumed that the information processing device 100 stores the generated candidate for the operation plan. The information processing device 100 stores, for example, an operation plan candidate management table 1300. The operation plan candidate management table 1300 includes, for example, fields of number, loadable weight upper limit, and base x. x represents an integer not smaller than 1. In the operation plan candidate management table 1300, information is set in each field for each candidate for the operation plan, so that the candidate for the operation plan is stored as a record.

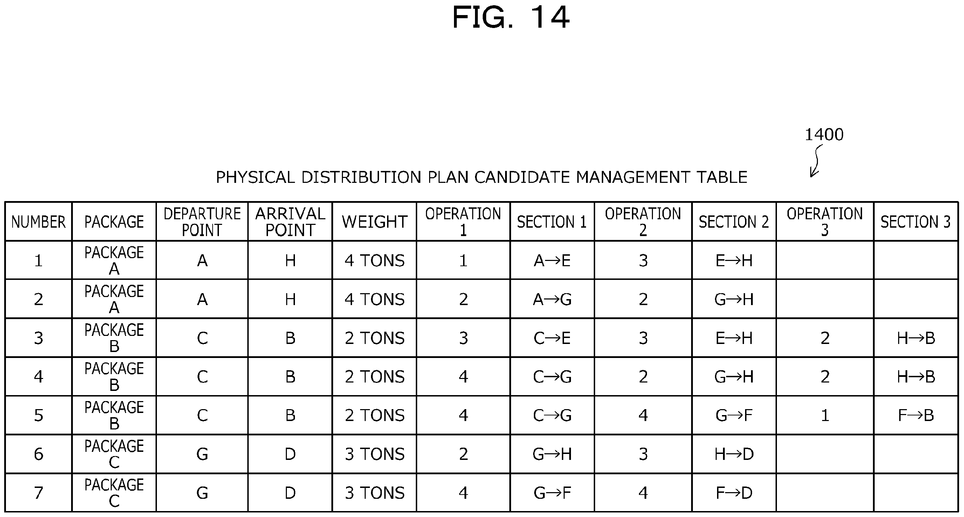

In the field of number, a number i assigned to the candidate for the operation plan is set. In the field of loadable weight upper limit, a loadable weight upper limit of the mobile body used for the candidate for the operation plan with the above-described number i is set. In the field of base x, a sign assigned to the base at which the mobile body arrives x-th in the candidate for the operation route included in the candidate for the operation plan with the above-described number i is set. Next, it shifts to the description of FIG. 14.

As illustrated in FIG. 14, it is assumed that the information processing device 100 stores the generated candidate for the physical distribution plan. The information processing device 100 stores, for example, a physical distribution plan candidate management table 1400. The physical distribution plan candidate management table 1400 includes, for example, fields of number, package, departure point, arrival point, weight, operation y, and section y. y represents an integer not smaller than 1. In the physical distribution plan candidate management table 1400, information is set in each field for each candidate for the physical distribution plan, so that the candidate for the physical distribution plan is stored as a record.

In the field of number, a number assigned to the candidate for the physical distribution plan is set. In the field of package, a sign assigned to the package delivered in the above-described candidate for the physical distribution plan is set. In the field of departure point, a sign assigned to the base as the departure point of the above-described package in the above-described candidate for the physical distribution plan is set. In the field of arrival point, a sign assigned to the base as the arrival point of the above-described package in the above-described candidate for the physical distribution plan is set.

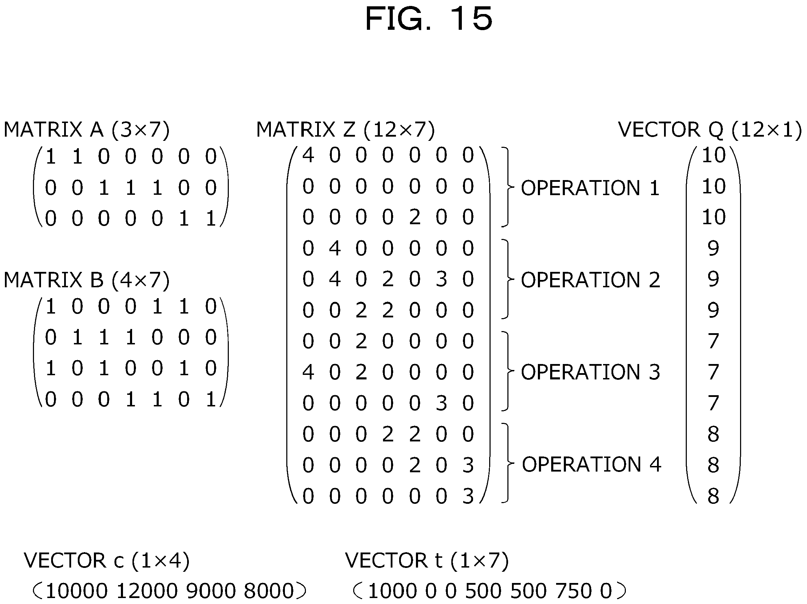

In the field of weight, the weight of the above-described package is set. In the field of operation x, a number assigned to the candidate for the operation plan used for the above-described candidate for the physical distribution plan is set. In the field of operation x, for example, a number assigned to the candidate for the operation plan indicating the candidate for the operation route including the section forming the candidate for the delivery route indicated by the candidate for the physical distribution plan is set. In the field of section x, the section included in the candidate for the operation route indicated by the above-described candidate for the operation plan forming the candidate for the delivery route indicated by the above-described candidate for the physical distribution plan is set. Next, it shifts to the description of FIG. 15.

In FIG. 15, the information processing device 100 sets the optimization problem based on p candidates for the operation plan and m candidates for the physical distribution plan. The information processing device 100 prepares a variable $X = (x_1, x_2,...)$. $x_j$ indicates whether to select a candidate j for the physical distribution plan as the physical distribution plan included in the delivery plan. $x_j$ is set to 1 in a case where the candidate j for the physical distribution plan is selected. $x_j$ is set to 0 in a case where the candidate j for the physical distribution plan is not selected. $j = 1,..., m$.

The information processing device 100 prepares a variable $Y = (y_1, y_2,...)$. $y_j$ indicates whether to select a candidate j for the operation plan as the operation plan included in the delivery plan. $y_j$ is set to 1 in a case where the candidate j for the operation plan is selected. $y_j$ is set to 0 in a case where the candidate j for the operation plan is not selected. $j = 1,..., p$.

The information processing device 100 sets a first constraint. The first constraint is that each package is completely delivered from the departure point to the arrival point by any candidate for the physical distribution plan. The first constraint is, for example, $AX = 1$. A represents an $n \times m$ matrix. An element $a_{ij}$ in an i-th row and a j-th column of A is set to 1 in a case where a j-th candidate for the physical distribution plan corresponds to an i-th package. The element $a_{ij}$ in the i-th row and the j-th column of A is set to 0 in a case where the j-th candidate for the physical distribution plan does not correspond to the i-th package. A represents, for example, a $3 \times 7$ matrix illustrated in FIG. 15.

The information processing device 100 sets a second constraint. The second constraint is that the candidate for the operation plan used in the selected candidate for the physical distribution plan is selected. The second constraint is, for example, $BX \leq M \times Y$. M represents a relatively large constant. B represents a $p \times m$ matrix. An element $b_{ij}$ in an i-th row and a j-th column of B is set to 1 in a case where the j-th candidate for the physical distribution plan uses an i-th candidate for the operation plan. The element $b_{ij}$ in the i-th row and the j-th column of B is set to 0 in a case where the j-th candidate for the physical distribution plan does not use the i-th candidate for the operation plan. B represents, for example, a $4 \times 7$ matrix illustrated in FIG. 15.

The information processing device 100 sets a third constraint. The third constraint is that the sum of the weights of the packages simultaneously delivered by the mobile body in the candidate for the operation plan is equal to or smaller than the loadable weight. The third constraint is, for example, $ZX \leq Q$. Z represents an $s \times m$ matrix. s represents the total number of sections forming the candidates for the operation routes in all of one or more candidates for the operation plan. An element $z_{ij}$ in an i-th row and a j-th column of Z is set to 1 in a case where the candidate for the delivery route indicated by the j-th candidate for the physical distribution plan uses an i-th section. The element $z_{ij}$ in the i-th row and the j-th column of Z is set to 0 in a case where the candidate for the delivery route indicated by the j-th candidate for the physical distribution plan does not use the i-th section. Z represents, for example, a 12×7 matrix illustrated in FIG. 15. Q represents a vector with s elements. An i-th element $q_i$ of Q represents an upper limit value of the loadable weight of the mobile body in the i-th section. Q represents, for example, a 12×1 vector illustrated in FIG. 15.

The information processing device 100 sets the objective function using the prepared variable X and variable Y. The information processing device 100 sets an objective function $\Sigma_i=1^p c_i y_i + \Sigma_i=1^m t_i x_i$, for example, $c_i$ represents a cost required for the i-th candidate for the operation plan. For example, $c_i$ includes a fixed cost per operation plan, a cost proportional to the operation time of the mobile body in the i-th candidate for the operation plan, and a cost required in a case where the i-th candidate for the operation plan is implemented by introducing a new mobile body. A vector c having $c_i$ as an element is, for example, a 1×4 vector illustrated in FIG. 15. $t_i$ represents a cost required for the i-th candidate for the physical distribution plan. $t_i$ represents, for example, a cost proportional to the weight of the package and the number of times the package is transshipped in the i-th physical distribution plan. A vector t having $t_i$ as an element is, for example, a 1×7 vector illustrated in FIG. 15.

The information processing device 100 sets the optimization problem using the first constraint, the second constraint, and the third constraint so as to minimize the index value indicated by the set objective function. The information processing device 100 calculates a solution of the variable X and a solution of the variable Y by solving the set optimization problem. The information processing device 100 determines that the candidate for the physical distribution plan corresponding to the element $x_j$ that is set to 1 out of the solutions of the variable X is the physical distribution plan to be included in the delivery plan. The information processing device 100 determines that the candidate for the operation plan corresponding to the element $y_j$ that is set to 1 out of the solutions of the variable Y is the operation plan to be included in the delivery plan. The information processing device 100 generates the delivery plan including the determined operation plan and the determined physical distribution plan, and outputs the same so that the user may refer to the same.

Therefore, the information processing device 100 may generate the appropriate delivery plan so as to reduce the delivery cost while reducing the processing amount and the processing time required when generating the delivery plan. The information processing device 100 may simultaneously optimize the operation plan and the physical distribution plan, for example, so that this may reduce the processing amount and the processing time required when generating the delivery plan.

The information processing device 100 may generate the delivery plan that is difficult to create manually based on the candidates for the operation route that are difficult to create manually. The information processing device 100 may generate the delivery plan so as to reduce the number of operation plans based on one or more candidates for the operation route prepared so as to facilitate the allocation of the packages handled by one mobile body to another mobile body. Therefore, the information processing device 100 may facilitate the reduction in the delivery cost.

The information processing device 100 may easily suppress the increase in delivery cost due to the transshipment of the package based on the candidate for the physical distribution plan in which the number of times the package is transshipped is relatively small. The information processing device 100 may easily suppress the increase in delivery cost due to the operation of the mobile body based on the candidate for the physical distribution plan in which the delivery time is relatively short.

(Example of Entire Processing Procedure)

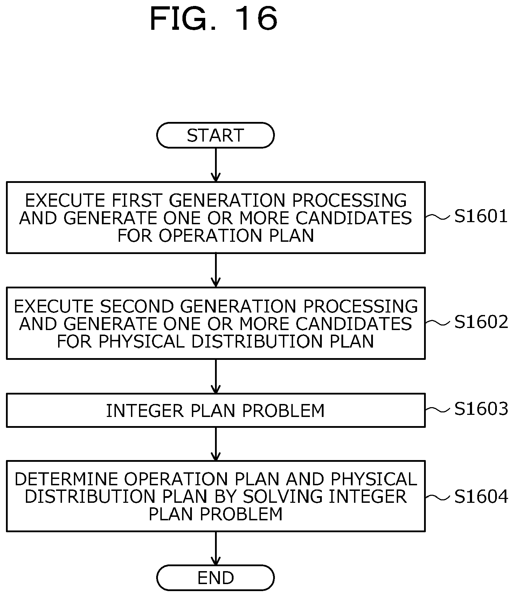

Next, an example of an entire processing procedure executed by the information processing device 100 will be described with reference to FIG. 16. Entire processing is implemented by, for example, the CPU 401, the storage area such as the memory 402 and the recording medium 405, and the network I/F 403 illustrated in FIG. 4.

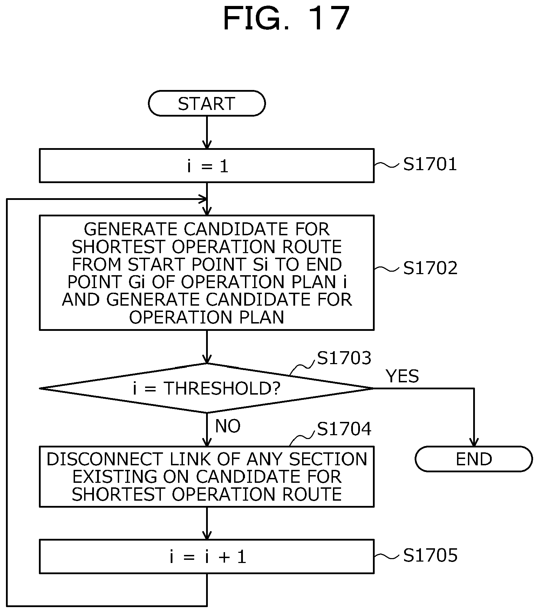

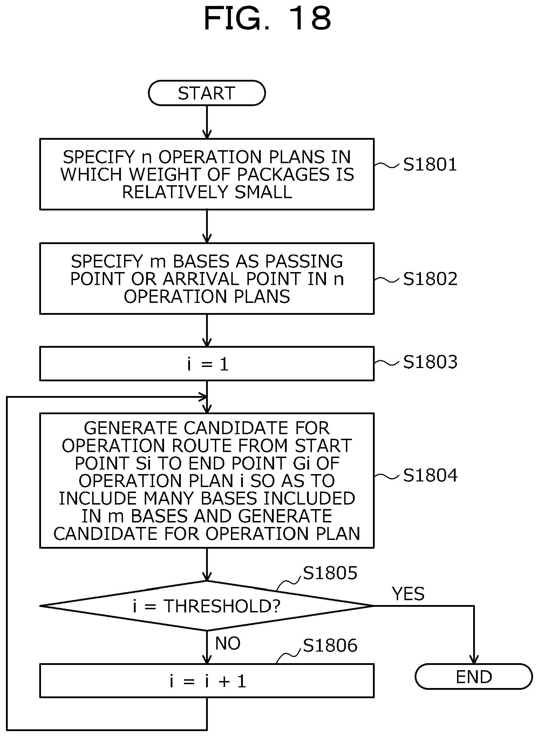

FIG. 16 is a flowchart illustrating the example of the entire processing procedure. In FIG. 16, the information processing device 100 executes first generation processing described later with reference to FIG. 17 or 18, to generate one or more candidates for the operation plan (step S1601).

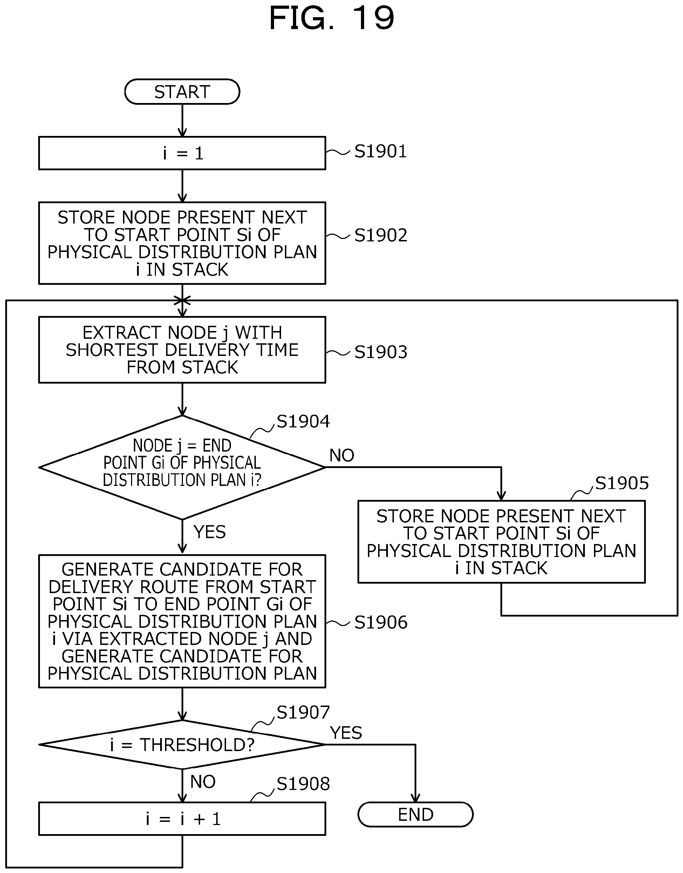

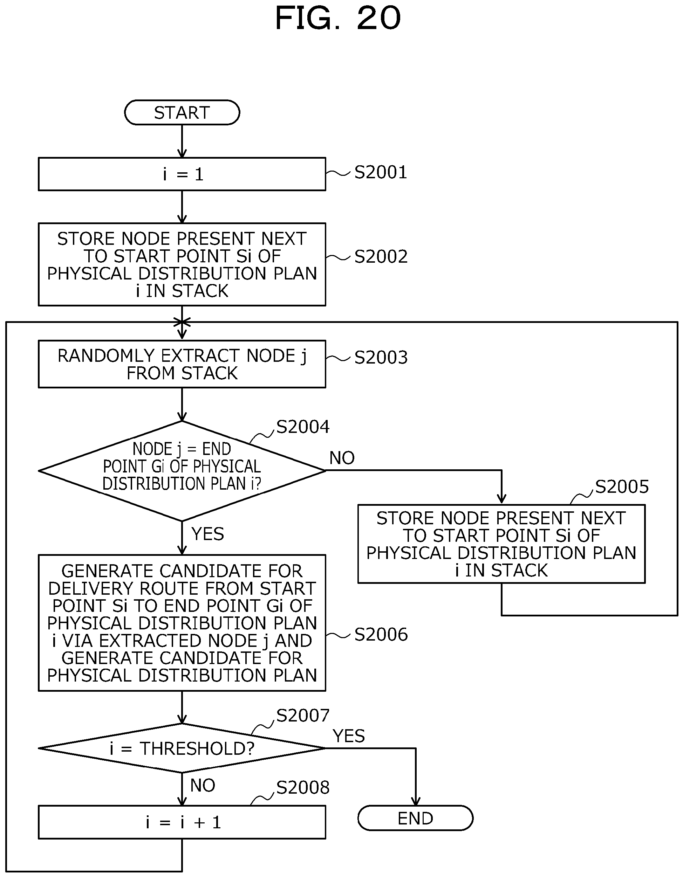

Next, the information processing device 100 executes second generation processing described later with reference to FIG. 19 or 20, to generate one or more candidates for the physical distribution plan (step S1602). Then, the information processing device 100 sets an integer plan problem based on the generated one or more candidates for the operation plan and the generated one or more candidates for the physical distribution plan (step S1603).

Next, the information processing device 100 solves the set integer plan problem using a solver to determine the operation plan and the physical distribution plan (step S1604). Then, the information processing device 100 finishes the entire processing.

(Example of First Generation Processing Procedure)

Next, an example of a first generation processing procedure executed by the information processing device 100 will be described with reference to FIG. 17. First generation processing is implemented by, for example, the CPU 401, the storage area such as the memory 402 and the recording medium 405, and the network I/F 403 illustrated in FIG. 4.

FIG. 17 is a flowchart illustrating the example of the first generation processing procedure. In FIG. 17, the information processing device 100 sets variable i = 1 (step S1701).

Next, the information processing device 100 generates candidates for a shortest operation route from a start point Si to an end point Gi of an operation plan i, and generates candidates for the operation plan that defines the generated candidates for the shortest operation route (step S1702).

Next, the information processing device 100 determines whether i = threshold is satisfied (step S1703). Here, in a case where i = threshold is satisfied (step S1703: Yes), the information processing device 100 finishes the first generation processing. In contrast, in a case where i= threshold is not satisfied (step S1703: No), the information processing device 100 shifts to processing at step S1704.

At step S1704, the information processing device 100 disconnects a link of any section present on the generated candidate for the shortest operation route (step S1704). Next, the information processing device 100 sets variable i = i + 1 (step S1705). Then, the information processing device 100 returns to the processing at step S1702.

(Another Example of First Generation Processing Procedure)

Next, another example of the first generation processing procedure executed by the information processing device 100 will be described with reference to FIG. 18. First generation processing is implemented by, for example, the CPU 401, the storage area such as the memory 402 and the recording medium 405, and the network I/F 403 illustrated in FIG. 4.

FIG. 18 is a flowchart illustrating the another example of the first generation processing procedure. In FIG. 18, the information processing device 100 specifies n operation plans L1, L2,...., Ln in which the weight of the delivered package is relatively small out of the existing operation plans (step S1801).

Next, the information processing device 100 specifies m bases N1, N2,..., Nm, which are a passing point or an arrival point in the specified n operation plans (step S1802). Then, the information processing device 100 sets a variable i = 1 (step S1803).

Next, the information processing device 100 generates candidates for the operation route from the start point Si to the end point Gi of the operation plan i such that many bases included in the m specified bases are included, and generates candidates for the operation plan that defines the generated candidates for the operation route (step S1804).

Then, the information processing device 100 determines whether i = threshold is satisfied (step S1805). Here, in a case where i = threshold is satisfied (step S1805: Yes), the information processing device 100 finishes the first generation processing. In contrast, in a case where i = threshold is not satisfied (step S1805: No), the information processing device 100 shifts to processing at step S1806.

At step S1806, the information processing device 100 sets variable i = i + 1 (step S1806). Then, the information processing device 100 returns to the processing at step S1804.

(Example of Second Generation Processing Procedure)

Next, an example of a second generation processing procedure executed by the information processing device 100 will be described with reference to FIG. 19. Second generation processing is implemented by, for example, the CPU 401, the storage area such as the memory 402 and the recording medium 405, and the network I/F 403 illustrated in FIG. 4.

FIG. 19 is a flowchart illustrating the example of the second generation processing procedure. In FIG. 19, the information processing device 100 sets variable i = 1 (step S1901).

Next, the information processing device 100 stores a node present next to a start point Si of a physical distribution plan i in a stack (step S1902). Then, the information processing device 100 extracts a node j with shortest delivery time from the stack (step S1903).

Next, the information processing device 100 determines whether node j = end point Gi of physical distribution plan i is satisfied (step S1904). Here, in a case where node j = end point Gi of physical distribution plan i is not satisfied (step S1904: No), the information processing device 100 shifts to processing at step S1905. In contrast, in a case where node j = end point Gi of physical distribution plan i is satisfied (step S1904: Yes), the information processing device 100 shifts to processing at step S1906.

At step S1905, the information processing device 100 clears out the stack and stores the node present next to the start point Si of the physical distribution plan i in the stack (step S1905). Then, the information processing device 100 returns to the processing at step S1903.

At step S1906, the information processing device 100 generates candidates for a delivery route from the start point Si to the end point Gi of the physical distribution plan i via the extracted node j, and generates candidates for the physical distribution plan that defines the generated candidates for the delivery route (step S1906).

Next, the information processing device 100 determines whether i = threshold is satisfied (step S1907). Here, in a case where i = threshold is satisfied (step S1907: Yes), the information processing device 100 finishes the second generation processing. In contrast, in a case where i = threshold is not satisfied (step S1907:

No), the information processing device 100 shifts to processing at step S1908.

At step S1908, the information processing device 100 sets variable i = i + 1 (step S1908). Then, the information processing device 100 returns to the processing at step S1903.

(Another Example of Second Generation Processing Procedure)

Next, another example of the second generation processing procedure executed by the information processing device 100 will be described with reference to FIG. 20. Second generation processing is implemented by, for example, the CPU 401, the storage area such as the memory 402 and the recording medium 405, and the network I/F 403 illustrated in FIG. 4.

FIG. 20 is a flowchart illustrating the another example of the second generation processing procedure. In FIG. 20, the information processing device 100 sets variable i = 1 (step S2001).

Next, the information processing device 100 stores a node present next to a start point Si of a physical distribution plan i in a stack (step S2002). Then, the information processing device 100 randomly extracts a node j from the stack (step S2003).

Next, the information processing device 100 determines whether node j = end point Gi of physical distribution plan i is satisfied (step S2004). Here, in a case where node j = end point Gi of physical distribution plan i is not satisfied (step S2004: No), the information processing device 100 shifts to processing at step S2005. In contrast, in a case where node j = end point Gi of physical distribution plan i is satisfied (step S2004: Yes), the information processing device 100 shifts to processing at step S2006.

At step S2005, the information processing device 100 clears out the stack and stores the node present next to the start point Si of the physical distribution plan i in the stack (step S2005). Then, the information processing device 100 returns to the processing at step S2003.

At step S2006, the information processing device 100 generates candidates for a delivery route from the start point Si to the end point Gi of the physical distribution plan i via the extracted node j, and generates candidates for the physical distribution plan that defines the generated candidates for the delivery route (step S2006).

Next, the information processing device 100 determines whether i = threshold is satisfied (step S2007). Here, in a case where i = threshold is satisfied (step S2007: Yes), the information processing device 100 finishes the second generation processing. In contrast, in a case where i = threshold is not satisfied (step S2007: No), the information processing device 100 shifts to processing at step S2008.

At step S2008, the information processing device 100 sets variable i = i + 1 (step S2008). Then, the information processing device 100 returns to the processing at step S2003.

Here, the information processing device 100 may change processing order of some steps in each of the flowcharts in FIGs. 16 to 20 and execute. Furthermore, the information processing device 100 may omit processing at some steps in each of the flowcharts in FIGs. 16 to 20.

As described above, the information processing device 100 may acquire the first candidate group including one or more candidates for the operation route of the mobile body generated for each mobile body out of a plurality of mobile bodies. The information processing device 100 may acquire the second candidate group including one or more candidates for the delivery route of the package using one or more mobile bodies included in the plurality of mobile bodies generated for each package out of a plurality of packages based on the first candidate group. The information processing device 100 may set the optimization problem using the first variable indicating whether to select each candidate included in the acquired first candidate group and a second variable indicating whether to select each candidate included in the acquired second candidate group. The object of the optimization problem is to optimize the index value based on the first cost regarding the operation of the mobile body and the second cost regarding the delivery of the package. By solving the set optimization problem, the information processing device 100 may determine the operation route of each mobile body out of the first candidate group, and determine the delivery route of each package out of the second candidate group. Therefore, the information processing device 100 may reduce the processing amount and the processing time required when generating the delivery plan.

The information processing device 100 may generate the first candidate group including the shortest operation route from the departure point of the mobile body to the arrival point of the mobile body, and one or more bypass routes from the departure point of the mobile body to the arrival point of the mobile body based on the shortest operation route as the candidates for the operation route of the mobile body. Therefore, the information processing device 100 may generate various delivery plans. The information processing device 100 may generate the delivery plan that is difficult to create manually.

The information processing device 100 may specify, out of existing operation routes of each mobile body, the passing point of the mobile body on the operation route on which the amount of the packages delivered by the mobile body is relatively small. The information processing device 100 may generate the first candidate group including the operation route from the departure point of the mobile body to the arrival point of the mobile body including the specified passing point as the candidate for the operation route of the mobile body. Therefore, the information processing device 100 may generate the delivery plan such that the number of operation plans becomes small. Therefore, the information processing device 100 may facilitate the reduction in the delivery cost.

The information processing device 100 may generate the second candidate group including the delivery route from the departure point of the package to the arrival point of the package formed of a combination of a relatively small number of candidates out of the acquired first candidate group as a candidate for the delivery route of the package. Therefore, the information processing device 100 may easily suppress the increase in delivery cost due to the transshipment of the package.

The information processing device 100 may generate the delivery route from the departure point of the package to the arrival point of the package in which the delivery time of the package becomes relatively short formed of a combination of one or more candidates out of the acquired first candidate group. The information processing device 100 may generate the second candidate group including the generated delivery route as the candidate for the delivery route of the package. Therefore, the information processing device 100 may easily suppress the increase in delivery cost due to the operation of the mobile body.

The information processing device 100 may set the first cost based on the number of candidates selected out of the first candidate group, whether the mobile body corresponding to the candidate exists, and the operation time of the mobile body corresponding to the candidate. The information processing device 100 may set the second cost based on the number of candidates selected out of the second candidate group, the amount of the packages corresponding to the candidate, and the number of mobile bodies that deliver the package corresponding to the candidate. Therefore, the information processing device 100 may easily optimize the delivery cost with high accuracy.

The information processing device 100 may determine the operation route of each mobile body out of the first candidate group, and determine the delivery route of each package out of the second candidate group by solving the optimization problem including the constraint regarding the upper limit of the amount of the packages the mobile body may deliver. Therefore, the information processing device 100 may generate a feasible delivery plan.

Note that, the information processing method described in this embodiment may be implemented by executing a program prepared in advance on a computer such as a personal computer (PC) or a workstation. The information processing program described in this embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), and the like. Furthermore, the information processing program described in this embodiment may be distributed via a network such as the Internet.

**Claims**

1. An information processing program that causes at least one computer to execute a process, the process comprising:

   acquiring a first candidate group that includes candidates of operating routes of each of a plurality of mobile bodies;
   acquiring a second candidate group that includes candidates of delivery routes of each of packages, the delivery routes being combinations of candidates of operating routes selected from the first candidate group;
   setting a function that uses a first variable that indicates whether to select each of the candidates included in the first candidate group and a second variable that indicates whether to select each of the candidates included in the second candidate group, the function specifying a value based on a first cost regarding an operation of a mobile body of the plurality of mobile bodies and a second cost regarding a delivery of a package of the plurality of packages;
   determining operation routes of each of the plurality of mobile bodies from the first candidate group and delivery routes of each of the plurality of packages from the second candidate group so as to minimize the value specified by the function under a constraint, the constraint being that candidates of operating routes included in the combination of selected candidates of the delivery routes from the second candidate group according to the second variable, are selected from the first candidate group according to the first variable; and
   outputting the operation routes of each of the plurality of mobile bodies and the delivery routes of each of the plurality of packages.

2. The information processing program according to claim 1, wherein

   the candidates of operating routes indicate a departure point and an arrival point of the plurality of mobile bodies, and
   the first candidate group includes a shortest operation route from the departure point to the arrival point, and bypass routes from the departure point to the arrival point that include at least one bypass point between the departure point and the arrival point.

3. The information processing program according to claim 2, wherein

the at least one bypass point include a transit point for movement of the package to another mobile body in the delivery of the package, and the second cost increases as a number of times of the movement of the package at the transit point increases.

4. The information processing program according to claim 3, wherein
the candidate route includes a transit point where, in past delivery routes, weight of packages loaded on the mobile body by the movement becomes less than weight of packages before the movement.

5. The information processing program according to claim 4, wherein
the second cost increases as a number of times of the movement of the package at the transit point increases.

6. The information processing program according to any one of claims 1 to 5, wherein

the candidates of delivery routes indicate maximum loading weights of each of the plurality of mobile bodies, and
the constraint includes that candidates of delivery routes that each weight of packages loaded on each of the plurality of mobile bodies is less than the maximum loading weights of each of the plurality of mobile bodies are selected from the second candidate group according to the second variable.

7. The information processing program according to any one of claims 1 to 6, wherein a number of the candidates included in the second candidate group is less than a number of the candidates in the first candidate group.

8. The information processing program according to any one of claims 1 to 7, wherein the set function is solved to minimize a processing amount required to obtain the output operation routes and delivery routes.

9. The information processing program according to any one of claims 1 to 8, w herein the set function is

$$\sum_{i=1}^{p} c_i y_i + \sum_{i=1}^{m} t_i x_i$$

x represents the first variable, y represents the second variable, $c_i$ represents the first cost required for the i-th candidate for the operation plan, $t_i$ represents the second cost required for the i-th candidate.

10. An information processing method for a computer to execute a process comprising:

acquiring a first candidate group that includes candidates of operating routes of each of a plurality of mobile bodies;
acquiring a second candidate group that includes candidates of delivery routes of each of packages, the delivery routes being combinations of candidates of operating routes selected from the first candidate group;
setting a function that uses a first variable that indicates whether to select each of the candidates included in the first candidate group and a second variable that indicates whether to select each of the candidates included in the second candidate group, the function specifying a value based on a first cost regarding an operation of a mobile body of the plurality of mobile bodies and a second cost regarding a delivery of a package of the plurality of packages;
determining operation routes of each of the plurality of mobile bodies from the first candidate group and delivery routes of each of the plurality of packages from the second candidate group so as to minimize the value specified by the function under a constraint, the constraint being that candidates of operating routes included in the combination of selected candidates of the delivery routes from the second candidate group according to the second variable, are selected from the first candidate group according to the first variable; and
outputting the operation routes of each of the plurality of mobile bodies and the delivery routes of each of the plurality of packages.

11. The information processing method according to claim 10, wherein

the candidates of operating routes indicate a departure point and an arrival point of the plurality of mobile bodies, and
the first candidate group includes a shortest operation route from the departure point to the arrival point, and bypass routes from the departure point to the arrival point that include at least one bypass point between the departure point and the arrival point.

12. The information processing method according to claim 11, wherein

the at least one bypass point include a transit point for movement of the package to another mobile body in the delivery of the package, and the second cost increases as a number of times of the movement of the package at the transit point increases.

13. The information processing method according to claim 12, wherein
the candidate route includes a transit point where, in past delivery routes, weight of packages loaded on the mobile body by the movement becomes less than weight of packages before the movement.

14. The information processing method according to claim 13, wherein
the second cost increases as a number of times of the movement of the package at the transit point increases.

15. An information processing device comprising a control unit configured to:

acquire a first candidate group that includes candidates of operating routes of each of a plurality of mobile bodies,
acquire a second candidate group that includes candidates of delivery routes of each of packages, the delivery routes being combinations of candidates of operating routes selected from the first candidate group,
set a function that uses a first variable that indicates whether to select each of the candidates included in the first candidate group and a second variable that indicates whether to select each of the candidates included in the second candidate group, the function specifying a value based on a first cost regarding an operation of a mobile body of the plurality of mobile bodies and a second cost regarding a delivery of a package of the plurality of packages,
determine operation routes of each of the plurality of mobile bodies from the first candidate group and delivery routes of each of the plurality of packages from the second candidate group so as to minimize the value specified by the function under a constraint, the constraint being that candidates of operating routes included in the combination of selected candidates of the delivery routes from the second candidate group according to the second variable, are selected from the first candidate group according to the first variable, and
output the operation routes of each of the plurality of mobile bodies and the delivery routes of each of the plurality of packages.

# FIG. 1

# FIG. 2

BASE E

TRUCK b

BASE H

BASE A

TRUCK a

BASE G

BASE C

PHYSICAL DISTRIBUTION
PLAN OF PACKAGE 1

BASE D

TRANSSHIPMENT
OF PACKAGE 1

OPERATION PLAN
OF TRUCK a

TRUCK c

PACKAGE 2

TRANSSHIPMENT OF
PACKAGES 1 AND 2

PACKAGE 1

BASE B

BASE F

BASE I

EP 4 235 541 A1

# FIG. 3

301

302

303

300

310

304

305

# FIG. 4

# FIG. 5

EP 4 235 541 A1

# FIG. 6

# FIG. 7

★ : PASSING POINT OR ARRIVAL POINT OF OPERATION PLAN IN WHICH SUM OF WEIGHTS OF PACKAGES IS RELATIVELY SMALL

# FIG. 8

METHOD OF SPECIFYING OPERATION PLAN
IN WHICH WEIGHT OF PACKAGE IS SMALL

801

802

**PHYSICAL DISTRIBUTION PLAN**
- PACKAGE NAME C1
- WEIGHT 900 kg

| ORDER | OPERATION PLAN | FROM | TO |
|-------|----------------|------|-----|
| 1 | D1 | N1 | N4 |
| 2 | D5 | N4 | N9 |
| 3 | D3 | N9 | N2 |

**OPERATION PLAN**
- PLAN NAME D5
- LOADABLE WEIGHT 10 TONS
ROUTE

| ORDER | BASE | ARRIVAL TIME | DEPARTURE TIME |
|-------|------|--------------|----------------|
| 1 | N6 | -- | 18:00 |
| 2 | N4 | 19:00 | 21:00 |
| 3 | N9 | 21:30 | -- |

# FIG. 9

Legend:
- ⇨ : CANDIDATE FOR OPERATION PLAN (TRUCK)
- → : CANDIDATE FOR PHYSICAL DISTRIBUTION PLAN (PACKAGE)
- ⌐ : TRANSSHIPMENT

$C_S$ — DEPARTURE POINT OF PACKAGE

$C_G$ — ARRIVAL POINT OF PACKAGE

901, 902, 903, 904, 905, 906

FIG. 10

# FIG. 11

CANDIDATE FOR OPERATION PLAN
(TWO PASSING POINTS, THREE SECTIONS)

START POINT

1101

PASSING
POINT 1

SECTION 1

PASSING
POINT 2

SECTION 2

SECTION 3

END POINT

CANDIDATE FOR OPERATION PLAN
(ONE PASSING POINT, TWO SECTIONS)

SECTION 5

END POINT

SECTION 4

PASSING
POINT 1

1102

START POINT

CANDIDATE FOR PHYSICAL DISTRIBUTION PLAN
(ONE PASSING POINT, TWO SECTIONS)

PASSING
POINT 1

1103

SECTION 4

END POINT

START POINT

SECTION 2

# FIG. 12

1200

# FIG. 13

OPERATION PLAN CANDIDATE
MANAGEMENT TABLE

1300

| NUMBER | LOADABLE WEIGHT UPPER LIMIT | BASE 1 | BASE 2 | BASE 3 | BASE 4 |
|---|---|---|---|---|---|
| 1 | 10 TONS | A | E | F | B |
| 2 | 9 TONS | A | G | H | B |
| 3 | 7 TONS | C | E | H | D |
| 4 | 8 TONS | C | G | F | D |

# FIG. 14

1400

PHYSICAL DISTRIBUTION PLAN CANDIDATE MANAGEMENT TABLE

EP 4 235 541 A1

| NUMBER | PACKAGE | DEPARTURE POINT | ARRIVAL POINT | WEIGHT | OPERATION 1 | SECTION 1 | OPERATION 2 | SECTION 2 | OPERATION 3 | SECTION 3 |
|---|---|---|---|---|---|---|---|---|---|---|
| 1 | PACKAGE A | A | H | 4 TONS | 1 | A→E | 3 | E→H | | |
| 2 | PACKAGE A | A | H | 4 TONS | 2 | A→G | 2 | G→H | | |
| 3 | PACKAGE B | C | B | 2 TONS | 3 | C→E | 3 | E→H | 2 | H→B |
| 4 | PACKAGE B | C | B | 2 TONS | 4 | C→G | 2 | G→H | 2 | H→B |
| 5 | PACKAGE B | C | B | 2 TONS | 4 | C→G | 4 | G→F | 1 | F→B |
| 6 | PACKAGE C | G | D | 3 TONS | 2 | G→H | 3 | H→D | | |
| 7 | PACKAGE C | G | D | 3 TONS | 4 | G→F | 4 | F→D | | |

# FIG. 15

MATRIX A (3×7)

$$\begin{pmatrix} 1 & 1 & 0 & 0 & 0 & 0 & 0 \\ 0 & 0 & 1 & 1 & 1 & 0 & 0 \\ 0 & 0 & 0 & 0 & 0 & 1 & 1 \end{pmatrix}$$

MATRIX B (4×7)

$$\begin{pmatrix} 1 & 0 & 0 & 0 & 1 & 1 & 0 \\ 0 & 1 & 1 & 1 & 0 & 0 & 0 \\ 1 & 0 & 1 & 0 & 0 & 1 & 0 \\ 0 & 0 & 0 & 1 & 1 & 0 & 1 \end{pmatrix}$$

MATRIX Z (12×7)

$$\begin{pmatrix} 4 & 0 & 0 & 0 & 0 & 0 & 0 \\ 0 & 0 & 0 & 0 & 0 & 0 & 0 \\ 0 & 0 & 0 & 0 & 2 & 0 & 0 \\ 0 & 4 & 0 & 0 & 0 & 0 & 0 \\ 0 & 4 & 0 & 2 & 0 & 3 & 0 \\ 0 & 0 & 2 & 2 & 0 & 0 & 0 \\ 0 & 0 & 2 & 0 & 0 & 0 & 0 \\ 4 & 0 & 2 & 0 & 0 & 0 & 0 \\ 0 & 0 & 0 & 0 & 0 & 3 & 0 \\ 0 & 0 & 0 & 2 & 2 & 0 & 0 \\ 0 & 0 & 0 & 0 & 2 & 0 & 3 \\ 0 & 0 & 0 & 0 & 0 & 0 & 3 \end{pmatrix}$$

⎫ OPERATION 1  
⎫ OPERATION 2  
⎫ OPERATION 3  
⎫ OPERATION 4

VECTOR Q (12×1)

$$\begin{pmatrix} 10 \\ 10 \\ 10 \\ 9 \\ 9 \\ 9 \\ 7 \\ 7 \\ 7 \\ 8 \\ 8 \\ 8 \end{pmatrix}$$

VECTOR c (1×4)

$$\langle 10000 \quad 12000 \quad 9000 \quad 8000 \rangle$$

VECTOR t (1×7)

$$\langle 1000 \quad 0 \quad 0 \quad 500 \quad 500 \quad 750 \quad 0 \rangle$$

EP 4 235 541 A1

# FIG. 16

```
                    ┌─────────────┐
                    │    START    │
                    └──────┬──────┘
                           │
                           ▼
     ┌──────────────────────────────────────────┐
     │  EXECUTE FIRST GENERATION PROCESSING      │
     │  AND GENERATE ONE OR MORE CANDIDATES      ├─ S1601
     │           FOR OPERATION PLAN              │
     └───────────────────┬──────────────────────┘
                         │
                         ▼
     ┌──────────────────────────────────────────┐
     │  EXECUTE SECOND GENERATION PROCESSING     │
     │  AND GENERATE ONE OR MORE CANDIDATES      ├─ S1602
     │     FOR PHYSICAL DISTRIBUTION PLAN        │
     └───────────────────┬──────────────────────┘
                         │
                         ▼
     ┌──────────────────────────────────────────┐
     │         INTEGER PLAN PROBLEM              ├─ S1603
     └───────────────────┬──────────────────────┘
                         │
                         ▼
     ┌──────────────────────────────────────────┐
     │  DETERMINE OPERATION PLAN AND PHYSICAL    │
     │  DISTRIBUTION PLAN BY SOLVING INTEGER     ├─ S1604
     │            PLAN PROBLEM                   │
     └───────────────────┬──────────────────────┘
                         │
                         ▼
                  ┌─────────────┐
                  │     END     │
                  └─────────────┘
```

# FIG. 17

START

i = 1 — S1701

GENERATE CANDIDATE FOR
SHORTEST OPERATION ROUTE
FROM START POINT Si TO END
POINT Gi OF OPERATION PLAN i
AND GENERATE CANDIDATE FOR
OPERATION PLAN — S1702

S1703
i = THRESHOLD?  — YES → END

NO   S1704

DISCONNECT LINK OF ANY SECTION
EXISTING ON CANDIDATE FOR
SHORTEST OPERATION ROUTE

i = i + 1 — S1705

# FIG. 18

START

SPECIFY n OPERATION PLANS IN WHICH WEIGHT OF PACKAGES IS RELATIVELY SMALL ～S1801

SPECIFY m BASES AS PASSING POINT OR ARRIVAL POINT IN n OPERATION PLANS ～S1802

i = 1 ～S1803

GENERATE CANDIDATE FOR OPERATION ROUTE FROM START POINT Si TO END POINT Gi OF OPERATION PLAN i SO AS TO INCLUDE MANY BASES INCLUDED IN m BASES AND GENERATE CANDIDATE FOR OPERATION PLAN ～S1804

S1805
i = THRESHOLD? —— YES

NO ／S1806
i = i + 1

END

# FIG. 19

START

i = 1 — S1901

STORE NODE PRESENT NEXT TO START POINT Si OF PHYSICAL DISTRIBUTION PLAN i IN STACK — S1902

EXTRACT NODE j WITH SHORTEST DELIVERY TIME FROM STACK — S1903

NODE j = END POINT Gi OF PHYSICAL DISTRIBUTION PLAN i? — S1904

NO → STORE NODE PRESENT NEXT TO START POINT Si OF PHYSICAL DISTRIBUTION PLAN i IN STACK — S1905

YES

GENERATE CANDIDATE FOR DELIVERY ROUTE FROM START POINT Si TO END POINT Gi OF PHYSICAL DISTRIBUTION PLAN i VIA EXTRACTED NODE j AND GENERATE CANDIDATE FOR PHYSICAL DISTRIBUTION PLAN — S1906

i = THRESHOLD? — S1907

YES → END

NO

i = i + 1 — S1908

# FIG. 20

START

i = 1 ～S2001

STORE NODE PRESENT NEXT TO START POINT Si OF PHYSICAL DISTRIBUTION PLAN i IN STACK ～S2002

RANDOMLY EXTRACT NODE j FROM STACK ～S2003

NODE j = END POINT Gi OF PHYSICAL DISTRIBUTION PLAN i? ～S2004

NO

STORE NODE PRESENT NEXT TO START POINT Si OF PHYSICAL DISTRIBUTION PLAN i IN STACK ～S2005

YES

GENERATE CANDIDATE FOR DELIVERY ROUTE FROM START POINT Si TO END POINT Gi OF PHYSICAL DISTRIBUTION PLAN i VIA EXTRACTED NODE j AND GENERATE CANDIDATE FOR PHYSICAL DISTRIBUTION PLAN ～S2006

i = THRESHOLD? ～S2007

YES

NO ～S2008

i = i + 1

END

Europäisches
Patentamt

European
Patent Office

Office européen
des brevets

**EUROPEAN SEARCH REPORT**

Application Number

EP 22 21 5502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/319371 A1 (ITO YUTO [JP]) 14 October 2021 (2021-10-14) | 1-3,5-8, 10-12, 14,15 | INV. G06Q10/0835 G06Q10/047 |
| Y | * abstract; figures 3, 4, 11, 12 * * paragraphs [0035] – [0067] * * paragraphs [0005], [0104] * ----- | 4,13 | G06Q50/28 |
| X | US 2001/047237 A1 (NAKAGAWA KAZUYA [JP] ET AL) 29 November 2001 (2001-11-29) | 1,2,10, 15 | |
| Y | * abstract; figure 5 * * paragraphs [0121] – [0126] * ----- | 3-8, 11-14 | |
| Y,P | US 2022/261755 A1 (NAKAYAMA TAKAAKI [JP] ET AL) 18 August 2022 (2022-08-18) * abstract; figures 1, 2 * * paragraphs [0028] – [0054] * ----- | 1-15 | |
| Y | US 2020/005240 A1 (KO SOZEN [JP] ET AL) 2 January 2020 (2020-01-02) * abstract; figures 1, 15, 18, 19, 21 * * paragraphs [0032] – [0055] * * paragraphs [0066] – [0092] * ----- | 1-15 | TECHNICAL FIELDS SEARCHED (IPC) G06Q |
| Y | US 2021/390479 A1 (ITOH SHOJI [JP] ET AL) 16 December 2021 (2021-12-16) * abstract; figures 1, 5-11 * * paragraphs [0046] – [0086] * ----- | 1-15 | |
| Y | US 2021/302184 A1 (HAYAMA SATORU [JP]) 30 September 2021 (2021-09-30) * paragraphs [0026] – [0046] * * paragraphs [0051] – [0103] * * paragraphs [0137] – [0152] * * paragraphs [0161] – [0166] * ----- | 1-15 | |

-/--

The present search report has been drawn up for all claims

| Place of search | Date of completion of the search | Examiner |
|---|---|---|
| Munich | 5 July 2023 | Mülthaler, Evelyn |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
&: member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 22 21 5502

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/236519 A1 (KANEKO YUSUKE [JP] ET AL) 1 August 2019 (2019-08-01)<br>* abstract; figures 2, 7-9 *<br>* paragraphs [0006] – [0016] *<br>* paragraphs [0061] – [0094] *<br>----- | 1-15 | |
| A,D | US 2006/241822 A1 (YADAPPANAVAR VINAY M [US] ET AL) 26 October 2006 (2006-10-26)<br>* abstract; figures 1-5 *<br>* paragraphs [0019] – [0079] *<br>----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 5 July 2023 | Mülthaler, Evelyn |

EPO FORM 1503 03.82 (P04C01)

## ANNEX TO THE EUROPEAN SEARCH REPORT
## ON EUROPEAN PATENT APPLICATION NO.

EP 22 21 5502

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2023

| Patent document cited in search report | | Publication date | Patent family member(s) | | Publication date |
|---|---|---|---|---|---|
| US 2021319371 | A1 | 14-10-2021 | CN | 113496375 A | 12-10-2021 |
| | | | EP | 3893171 A1 | 13-10-2021 |
| | | | JP | 2021165196 A | 14-10-2021 |
| | | | US | 2021319371 A1 | 14-10-2021 |
| US 2001047237 | A1 | 29-11-2001 | AT | 420422 T | 15-01-2009 |
| | | | EP | 1003140 A1 | 24-05-2000 |
| | | | ES | 2319702 T3 | 11-05-2009 |
| | | | JP | 3161529 B2 | 25-04-2001 |
| | | | JP | 2000036093 A | 02-02-2000 |
| | | | US | 2001047237 A1 | 29-11-2001 |
| | | | WO | 9960543 A1 | 25-11-1999 |
| US 2022261755 | A1 | 18-08-2022 | JP | WO2021049073 A1 | 18-03-2021 |
| | | | US | 2022261755 A1 | 18-08-2022 |
| | | | WO | 2021049073 A1 | 18-03-2021 |
| US 2020005240 | A1 | 02-01-2020 | CN | 110659855 A | 07-01-2020 |
| | | | JP | 7077162 B2 | 30-05-2022 |
| | | | JP | 2020004181 A | 09-01-2020 |
| | | | US | 2020005240 A1 | 02-01-2020 |
| US 2021390479 | A1 | 16-12-2021 | CN | 113807639 A | 17-12-2021 |
| | | | JP | 2021196958 A | 27-12-2021 |
| | | | US | 2021390479 A1 | 16-12-2021 |
| US 2021302184 | A1 | 30-09-2021 | CN | 112889099 A | 01-06-2021 |
| | | | EP | 3940669 A1 | 19-01-2022 |
| | | | JP | WO2020188893 A1 | 24-09-2020 |
| | | | US | 2021302184 A1 | 30-09-2021 |
| | | | WO | 2020188893 A1 | 24-09-2020 |
| US 2019236519 | A1 | 01-08-2019 | CN | 110097305 A | 06-08-2019 |
| | | | JP | 6935760 B2 | 15-09-2021 |
| | | | JP | 2019133373 A | 08-08-2019 |
| | | | US | 2019236519 A1 | 01-08-2019 |
| US 2006241822 | A1 | 26-10-2006 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012020839 A
- JP 2002229635 A
- JP 2019012488 A
- US 20180082253
- US 20060241822